# EUROPÄISCHE PATENTSCHRIFT

(11) **EP 4 594 888 B1**
(45) Veröffentlichungstag und Bekanntmachung des Hinweises auf die Patenterteilung: **14.01.2026**
(21) Anmeldenummer: 23806186.5
(22) Anmeldetag: 09.11.2023
(51) Int. Cl.: G06F 11/362, G06F 11/3698, G06F 8/71

(54) **VERFAHREN ZUM AUSFÜHREN EINES DEBUGGING-VORGANGS EINES STEUERPROGRAMMS EINES AUTOMATISIERUNGSSYSTEMS**
METHOD FOR EXECUTING A DEBUGGING PROCESS OF A CONTROL PROGRAM OF AN AUTOMATION SYSTEM
PROCÉDÉ D'EXÉCUTION D'UNE OPÉRATION DE DÉBOGAGE D'UN PROGRAMME DE COMMANDE D'UN SYSTÈME D'AUTOMATISATION

(30) Priorität: 10.11.2022 DE 102022129772
(43) Veröffentlichungstag der Anmeldung: 06.08.2025
(73) Patentinhaber: Beckhoff Automation GmbH, 33415 Verl (DE)
(72) Erfinder: DREESEN, Ralf, 33397 Rietberg (DE)
(74) Vertreter: Patentanwaltskanzlei WILHELM & BECK
(86) Internationale Anmeldenummer: PCT/EP2023/081335
(87) Internationale Veröffentlichungsnummer: WO 2024/100208

(56) Entgegenhaltungen:
- US-A- 5 179 702
- US-A- 5 848 274
- US-A1- 2019 205 239

## Beschreibung

Die Erfindung betrifft ein Verfahren zum Ausführen eines Debugging-Vorgangs eines Steuerprogramms eines Automatisierungssystems.

Die vorliegende Patentanmeldung beansprucht die Priorität der deutschen Patentanmeldung DE 10 2022 129 772.1, deren Offenbarungsgehalt hiermit durch Rückbezug aufgenommen wird.

Zur Steuerung und Regelung von Maschinen und Anlagen, insbesondere im Automatisierungsbereich, werden überwiegend speicherprogrammierbare Steuerungen SPS eingesetzt. Die Steuerungs- bzw. Regelungsverhalten werden hierbei durch entsprechend eingerichtete und auf der jeweiligen SPS ausführbare Steuerprogramme ausgedrückt. Derartige Steuerprogramme werden in der Regel von einem Entwickler individuell für den jeweiligen Maschinen- bzw. Anlagentyp entwickelt.

Um das Verhalten des Steuerprogramms zu erproben, wird dabei oft ein unvollständiges, jedoch lauffähiges Steuerprogramm frühzeitig durch den Entwickler auf der SPS installiert und ausgeführt. Während der Ausführung kann die Ansteuerung der Maschine bzw. Anlage beobachtet und das Steuerprogramm durch die gewonnenen Erkenntnisse durch Änderungen des Programms verbessert werden.

Zur Gewinnung von Erkenntnissen (z. B. zur Fehleranalyse) können Steuerprogramme während ihrer Ausführung auf einem Steuerungssystem durch Entwickler mit Werkzeugen (Debugger) beobachtet und gesteuert werden. Dazu hat ein Entwickler in der Regel Zugang zu dem Quellcode des ausgeführten Steuerprogramms, der für gewöhnlich auf dem von ihm ausgeführten Entwicklungssystem gespeichert ist.

Zum Untersuchen der Funktionsfähigkeit des Steuerprogramms kann der Entwickler durch Setzen sogenannter Haltepunkte eine stückweise Ausführung des Steuerprogramms bewirken, in der das Steuerprogramm jeweils an der Stelle des Haltepunkts angehalten wird. Der Entwickler kann in diesem Zustand Variablen inspizieren und die Ausführung schrittweise, sprich Programmzeile für Programmzeile, fortsetzen und so Zwischenergebnisse des Steuerprogramms kontrollieren. Dabei wird stets die aktuelle Position der Ausführungsunterbrechung in der Anzeige des Quellcodes markiert. Diese Grundfunktionen werden von üblichen Entwicklungswerkzeugen bereitgestellt.

Probleme können jedoch auftreten, wenn der Quellcode auf dem Entwicklungssystem von jenem Quellcode abweicht, aus dem das aktuell laufende Steuerprogramm übersetzt wurde.

Aus US5848274 ist ein Verfahren zum Ausführen eines Debugging-Vorgangs wobei der Maschinencode auf ein anderes System ausgeführt (erste Maschine) wird als das System wo den Quellencode entwickelt wurde (zweite Maschine) bekannt. Wenn eine Änderung des Maschinencodes entdeckt wird, wird mittels eine Maschinencode-Quellencode-Relation die entsprechende Quellencodezeile(n) ermittelt und der erste Maschine initiiert eine entsprechende Änderung in dem Quellencode auf der zweite Maschine.

Es ist daher eine Aufgabe der Erfindung, ein verbessertes Verfahren zum Ausführen eines Debugging-Vorgangs eines Steuerprogramms eines Automatisierungssystems bereitzustellen.

Die Aufgabe wird durch das Verfahren zum Ausführen eines Debugging-Vorgangs eines Steuerprogramms eines Automatisierungssystems gemäß Anspruch 1 gelöst. Bevorzugte Ausführungsformen sind in den unabhängigen Ansprüchen angegeben.

Nach einem Aspekt der Erfindung wird ein Verfahren zum Ausführen eines Debugging-Vorgangs eines Steuerprogramms eines Automatisierungssystems bereitgestellt, umfassend:
Empfangen einer Maschinencode-Quellcode-Relation und einer ersten Quellcodeidentität durch ein Entwicklungssystem zum Ausführen des Debugging-Vorgangs in einem Empfangsschritt, wobei die Maschinencode-Quellcode-Relation Zuordnungen zwischen Zeilen einer ersten Version eines Quellcodes des Steuerprogramms und entsprechenden Code-Elementen eines durch Übersetzung der ersten Quellcodeversion generierten Maschinencodes des Steuerprogramms definiert, und wobei die erste Quellcodeidentität eine Information bezüglich der ersten Quellcodeversion umfasst, die eine Identifikation einzelner Zeilen der ersten Quellcodeversion ermöglicht;
Vergleichen der ersten Quellcodeidentität mit einer zweiten Quellcodeidentität einer auf dem Entwicklungssystem ausgeführten zweiten Quellcodeversion in einem Quellcodevergleichsschritt, wobei die zweite Quellcodeversion durch wenigstens eine Quellcodeänderung aus der ersten Quellcodeversion hervorgegangen ist, und wobei die zweite Quellcodeidentität eine Information bezüglich der zweiten Quellcodeversion umfasst, die eine Identifikation einzelner Zeilen der zweiten Quellcodeversion ermöglicht;
Generieren einer Versionsidentität basierend auf dem Vergleich der ersten Quellcodeidentität und der zweiten Quellcodeidentität in einem Identitätsgenerierungsschritt, wobei die Versionsidentität Zuordnungen zwischen Zeilen der ersten Quellcodeversion und den Zeilen der ersten Version entsprechenden Zeilen der zweiten Quellcodeversion definiert;
Ermitteln einer zweiten Maschinencode-Quellcode-Relation basierend auf der ersten Maschinencode-Quellcode-Relation und der Versionsidentität in einem Relationsermittlungsschritt, wobei die zweite Maschinencode-Quellcode-Relation Zuordnungen zwischen Zeilen der zweiten Quellcodeversion und entsprechenden Code-Elementen des Maschinencodes definiert; und
Ausführen des Debugging-Vorgangs des auf der Steuereinheit gespeicherten Maschinencodes basierend auf der zweiten Quellcodeversion unter Verwendung der zweiten Maschinencode-Quellcode-Relation in einem Debugging-Schritt.

Hierdurch kann der technische Vorteil erreicht werden, dass ein verbessertes Verfahren zum Ausführen eines Debugging-Vorgangs eines Steuerprogramms eines Automatisierungssystems bereitgestellt werden kann. Mit dem verbesserten Verfahren kann insbesondere ein Debugging-Vorgang eines Steuerprogramms ausgeführt werden, der auf einer Version eines Quellcodes des Steuerprogramms ausgeführt wird, der nicht mit der Version des übersetzten und ausführbaren Maschinencodes des Steuerprogramms korrespondiert.

Insbesondere kann durch das erfindungsgemäße Verfahren der Fall abgedeckt werden, dass ein Maschinencode eines Steuerprogramms durch einen Übersetzungsvorgang einer ersten Version eines Quellcodes generiert wurde. Durch Vornahmen von Änderungen der ersten Quellcodeversion ist im Folgenden eine zweite Quellcodeversion generiert worden. Die zweite Quellcodeversion stimmt demnach nicht mit der generierten Version des Maschinencodes überein.

Herkömmliche Debugging-Prozesse sind nicht in der Lage, basierend auf Quellcode, der von einem jeweiligen Maschinencode abweicht, Debugging-Prozesse des jeweiligen Programms auszuführen.

Erfindungsgemäß wird dieses Problem dadurch gelöst, dass neben einer ersten Maschinencode-Quellcode-Relation, die während des Übersetzungsprozesses der ersten Quellcodeversion generiert wird und Zuordnungen zwischen Zeilen der ersten Quellcodeversion des Steuerprogramms und entsprechenden Codeelementen des durch Übersetzung generierten Maschinencodes definiert, zusätzlich eine erste Quellcodeidentität bereitgestellt wird. Die erste Quellcodeidentität stellt hierbei Informationen bezüglich der ersten Quellcodeversion bereit, die Identifikationen einzelner Zeilen der ersten Quellcodeversion ermöglicht.

Ferner wird eine zweite Quellcodeidentität basierend auf der von der ersten Quellcodeversion abweichenden zweiten Quellcodeversion bereitgestellt, die analog zur ersten Quellcodeidentität Informationen bezüglich des zweiten Quellcodes bereitstellt, die Identifikationen einzelner Zeilen des zweiten Quellcodes ermöglicht.

Die beiden Quellcodeidentitäten der ersten Quellcodeversion und der zweiten Quellcodeversion werden darauffolgend miteinander verglichen und eine Versionsidentität wird generiert.

Die Versionsidentität definiert Zuordnungen zwischen den Zeilen der ersten Quellcodeversion und den Zeilen der zweiten Quellcodeversion.

Die Versionsidentität identifiziert hiermit die Zeilen, die in der ersten Quellcodeversion und in der zweiten Quellcodeversion übereinstimmen. Ferner werden die Zeilen der ersten Quellcodeversion und der zweiten Quellcodeversion identifiziert, die in der jeweils anderen Quellcodeversion keine Entsprechung aufweisen.

Basierend auf der ersten Maschinencode-Quellcode-Relation und der Versionsidentität wird darauffolgend eine zweite Maschinencode-Quellcode-Relation ermittelt. Die zweite Maschinencode-Quellcode-Relation definiert hierbei Zuordnungen zwischen Zeilen der zweiten Quellcodeversion und entsprechen Codeelementen des Maschinencodes.

Über die zweite Maschinencode-Quellcode-Relation ist somit ein eindeutiger Zusammenhang zwischen den Zeilen der zweiten Quellcodeversion und den Elementen des Maschinencodes bekannt. Die zweite Maschinecode-Quellcode-Relation identifiziert somit in eindeutiger Weise, die Zeilen der zweiten Quellcodeversion, die eine Entsprechung im Maschinencode aufweisen, und die Zeilen der zweiten Quellcodeversion, die keine Entsprechung im Maschinencode aufweisen. Basierend auf der zweiten Maschinencode-Quellcode-Relation kann somit ein entsprechender Debugging-Vorgang des Steuerprogramms unter Verwendung der zweiten Quellcodeversion ausgeführt werden.

Durch das erfindungsgemäße Verfahren können somit Debugging-Prozesse von Steuerprogrammen ausgeführt werden, die auf Quellcodeversionen des Steuerprogramms durchgeführt werden, die nicht den jeweiligen Maschinencodes des Steuerprogramms entsprechen.

Dies ist beispielsweise vorteilhaft für Debugging-Vorgänge während des Programmiervorgangs des Steuerprogramms. Zum Ausführen des Debugging-Vorgangs muss somit nicht bei jeder ausgeführten Änderung des Quellcodes eine erneute Übersetzung des Quell-codes in entsprechenden Maschinencode ausgeführt werden.

Stattdessen kann der Debugging-Vorgang auf dem bereits bestehenden Maschinencode ausgeführt werden, selbst wenn der dazugehörige Quellcode in der vorliegenden Version bereits abgeändert wurde. Dies erleichtert den Programmiervorgang.

Darüber hinaus ermöglicht das erfindungsgemäße Verfahren das Ausführen von Debugging-Vorgängen, bei denen der Programmiervorgang beispielsweise aufgeteilt auf verschiedene Entwickler vorgenommen wird, die in unterschiedlichen Entwicklungsumgebungen bzw. Entwicklungssystemen die Entwicklung des Steuerprogramms bewirken. Wenn die Entwickler auf unterschiedlichen Quellcodeversionen arbeiten, da nicht bei jeder Änderung des Quellcodes eine erneute Übersetzung des Quellcodes in entsprechenden Maschinencode ausgeführt würde, können die einzelnen Entwickler von den unterschiedlichen Entwicklungssystemen ausgehend, basierend auf den verschiedenen Quellcodeversionen, dennoch einen aussagefähigen Debugging-Vorgang des bereits erzeugten Steuerprogramms ausführen.

Durch das Ausführen des Debugging-Vorgangs können insbesondere verbesserte Steuerprogramme bereitgestellt werden. Hierdurch kann eine verbesserte, effizientere und sichere Steuerung des Automatisierungssystems erreicht werden.

Ein Entwicklungssystem 300 ist im Sinne der Anmeldung eine Entwicklungsumgebung zum Entwickeln von Quelltexten. Ein derartiges Entwicklungssystem kann beispielsweise durch eine IDE (intelligent development engine) gegeben sein.

Ein Entwicklungssystem, wie es beispielsweise in der Automatisierungstechnik verwendet wird, stellt einem Entwickler von Automatisierungssoftware verschiedene Funktionen zur Programmierung solcher Software zur Verfügung. Dazu zählen bei textbasierten Programmiersprachen aus der DIN 61131 zum Beispiel das Autovervollständigen von oft verwendeten Programmierausdrücken oder ähnliches. Bei graphischen Programmiersprachen aus der DIN 61131 stellt das Entwicklungssystem die graphische Darstellung dieser Programmierung zur Verfügung.

Ein Entwicklungssystem kann somit von Entwicklern von Softwareprodukten genutzt, um für Maschinen beziehungsweise Automatisierungssysteme und andere technische Anlagen Steuerungsprogramme zu entwickeln.

Hierzu können von den Entwicklern unterschiedliche Programmiersprachen verwendet werden. Im Automatisierungsbereich werden primär Programmiersprachen aus der DIN 61131 verwendet. Diese können auch grafische Programmiersprachen umfassen.

Entwicklungssysteme können von Entwicklern ferner dazu genutzt werden, Verhalten von programmierten Steuerungspro-grammen während der Ausführung zu beobachten und nachzuvollziehen, beispielsweise um Fehlverhalten zu analysieren oder das Verhalten zu optimieren. Dies wird in Debugging-Prozessen erreicht.

Entwicklungssystem können auch von Technikern genutzt werden, um eine Anlage, beispielsweise ein Automatisierungssystem, in Betrieb zu nehmen. Dies kann eine Übertragung eines Steuerungsprogramms auf eine entsprechende Steuerung, beispielsweise eine SPS - Speicherprogrammierbare Steuerung, und eine Einstellung von Anlagenparametern beziehungsweise eine oben beschriebene Beobachtung des Anlagenverhaltens umfassen, um Installationsfehler ausschließen oder entdecken zu können.

Entwicklungssysteme können auch von Bedienern einer technischen Anlage, beispielsweise eines Automatisierungssystems, genutzt werden, um die Anlage zu kontrollieren, manuell zu bedienen, Verhalten zu überbrücken oder einfache Parameter einzustellen.

Für gewöhnlich wird ein Steuerungsprogramm in einer oder mehreren der Sprachen der Norm IEC 61131-3 formuliert.

Die Norm umfasst fünf Sprachen: "Strukturierter Text", "Anweisungsliste", "Ablaufsprache, "Kontaktplan" und "Funktionsbausteinsprache". "Strukturierter Text" und "Anweisungsliste" sind textuelle Sprachen. "Kontaktplan" und "Funktionsbausteinsprache" sind grafische Sprachen. "Kontaktplan" umfasst sowohl textuelle als auch grafische Aspekte.

Die Eingabe von Quelltext während des Programmierens kann durch einen Autovervollständigungsmechanismus innerhalb des verwendeten Entwicklungssystems unterstützt sein. Die Autovervollständigung kann zum Beispiel die Eingabe eines Schlüsselworts vervollständigen, korrigieren und/oder ein weiteres zugehöriges Schlüsselwort einfügen.

Auch kann durch Einblenden von Informationen die Eingabe erleichtert werden. Beispielsweise können erwartete Parameter eines Funktionsaufrufs angezeigt werden.

Wird Programmcode (während der Eingabe) als fehlerhaft erkannt, kann die entsprechende Stelle innerhalb des Quell-codes markiert und optional eine Erläuterung eingeblendet werden, wodurch die unmittelbare Fehlerbehebung erleichtert werden kann.

Nach einer Ausführungsform umfasst die erste Quellcodeidentität die erste Quellcodeversion und die zweite Quellcodeidentität die zweite Quellcodeversion.

Hierdurch kann der technische Vorteil erreicht werden, dass über die ersten und zweiten Quellcodeidentitäten eine präzise Zuordnung zwischen den ersten und zweiten Quellcodeversionen erreicht werden kann. Hierzu umfassen die ersten und zweiten Quellcodeidentitäten die jeweils ersten und zweiten Quellcodeversionen.

Durch den oben beschriebenen Vergleich zwischen den ersten und zweiten Quellcodeidentitäten und das Generieren der Versionsidentität kann somit basierend auf den ersten und zweiten Quellcodeversionen exakt ermittelt werden, welche Zeilen der zweiten Quellcodeversion welchen Zeilen der ersten Quellcodeversion entsprechen bzw. welche Zeilen der zweiten Quellcodeversion keine Entsprechung in der ersten Quellcodeversion aufweisen.

Durch die Verwendung der ersten und zweiten Quellcodeversionen als Quellcodeidentitäten kann eine präzise Versionsidentität bereitgestellt werden. Hierüber kann wiederum eine präzise zweite Maschinencode-Quellcode-Relation erstellt werden, indem durch die exakte Zuordnung der Zeilen der zweiten Quellcodeversion zu den Zeilen der ersten Quellcodeversion eine exakte Zuordnung der Zeilen der zweiten Quellcodeversion zu den jeweiligen Elementen des Maschinencodes ermöglicht ist.

Nach einer Ausführungsform umfasst die erste Quellcodeidentität eine erste verschlüsselte Quellcodeversion, die auf einer Verschlüsselung der ersten Quellcodeversion basiert, wobei das Verfahren ferner umfasst:
Verschlüsseln der zweiten Quellcodeversion und Generieren einer zweiten verschlüsselten Quellcodeversion in einem Verschlüsselungsschritt, wobei die zweite Quellcodeidentität die zweite verschlüsselte Quellcodeversion umfasst; und wobei das Vergleichen der ersten und zweiten Quellcodeidentitäten ein Vergleichen der ersten und zweiten verschlüsselten Quellcodeversionen umfasst.

Hierdurch kann der technische Vorteil erreicht werden, dass die Verschlüsselungen der ersten und zweiten Quellcodeversionen eine erhöhte Datensicherheit erlauben. Hierzu werden von den ersten und zweiten Quellcodeversionen jeweils erste und zweite verschlüsselte Quellcodeversionen bereitgestellt.

Die erste Quellcodeidentität umfasst hierbei entsprechend die erste verschlüsselte Quellcodeversion, die auf einer Verschlüsselung der ersten Quellcodeversion basiert. Indem für die erste Quellcodeidentität nicht die tatsächliche erste Quellcodeversion, sondern eine verschlüsselte Version der ersten Quellcodeversion verwendet wird, kann neben dem Maschinencode basierend auf der Maschinencode-Quellcode-Relation auch die erste Quellcodeidentität auf der Steuereinheit des Automatisierungssystems gespeichert werden.

Indem lediglich eine verschlüsselte Quellcodeversion in Form der ersten verschlüsselten Quellcodeversion der ersten Quellcodeidentität auf der Steuereinheit des Automatisierungssystems gespeichert ist, kann vermieden werden, dass der Quellcode des Steuerprogramms für Nutzer des Automatisierungssystems zugänglich ist.

Während des Betriebs des Automatisierungssystems durch einen Nutzer kann somit die erste Quellcodeidentität in Form der ersten verschlüsselten Quellcodeversion auf der Steuereinheit gespeichert bleiben. Bei Weiterentwicklung des Steuerprogramms durch Programmiervorgänge kann somit der Entwickler auf die auf der Steuereinheit gespeicherte erste Quellcodeidentität zurückgreifen und hierüber Informationen bezüglich der Zeilen der ersten Quellcodeversion beziehen. Die Gefahr, dass der Quellcode des Steuerprogramms durch den Nutzer des Automatisierungssystems eingelesen werden kann, besteht aufgrund der Verschlüsselung der ersten Quellcodeversion innerhalb der ersten Quellcodeidentität nicht.

Das oben beschriebene Verfahren zum Ermitteln der zweiten Maschinencode-QuellcodeIdentität und die Zuordnungen zwischen den Zeilen der zweiten Quellcodeversion und den entsprechenden Elementen des auf der Steuereinheit gespeicherten Maschinencodes können durch die Verschlüsselungen der ersten und zweiten Quellcodeversionen analog durchgeführt werden.

Hierzu wird zunächst durch eine Verschlüsselung der zweiten Quellcodeversion eine zweite verschlüsselte Quellcodeversion generiert. Ferner wird eine zweite Quellcodeidentität generiert, die die zweite verschlüsselte Quellcodeversion umfasst und Informationen bezüglich der Zeilen der zweiten Quellcodeversion bereitstellt.

Analog umfasst die auf der Steuereinheit des Automatisierungssystems speicherbare erste Quellcodeidentität die bereits erwähnte erste verschlüsselte Quellcodeversion.

Durch Vergleichen der ersten und zweiten Quellcodeidentitäten, in denen die erste verschlüsselte Quellcodeversion mit der zweiten verschlüsselten Quellcodeversion verglichen wird, können analog zu der oben beschriebenen Ausführungsform Zuordnungen zwischen den Zeilen der ersten verschlüsselten Quellcodeversion und den Zeilen der zweiten verschlüsselten Quellcodeversion erreicht werden.

Hierauf basierend kann die Versionsidentität generiert werden, die in diesem Fall die Zuordnung zwischen den verschlüsselten Zeilen der ersten verschlüsselten Quellcodeversion und den verschlüsselten Zeilen der zweiten verschlüsselten Quellcodeversion definiert.

Hierauf basierend kann die zweite Maschinencode-Quellcode-Relation ermittelt werden, in der die Zuordnung zwischen den Zeilen der zweiten Quellcodeversion und den entsprechenden Elementen des Maschinencodes definiert ist.

Hierbei wird davon ausgegangen, dass die verschlüsselten Zeilen der ersten verschlüsselten Quellcodeversion mit den Zeilen der ersten Quellcodeversion und die verschlüsselten Zeilen der zweiten verschlüsselten Quellcodeversion mit den unverschlüsselten Zeilen der zweiten Quellcodeversion in Relation stehen.

Nach einer Ausführungsform erfolgt die Verschlüsselung der ersten und zweiten Quellcodeversionen zeilenweise.

Hierdurch kann der technische Vorteil erreicht werden, dass eine präzise Zuordnung der unverschlüsselten Zeilen der ersten Quellcodeversion und der verschlüsselten Zeilen der ersten verschlüsselten Quellcodeversion und eine präzise Zuordnung der unverschlüsselten Zeilen der zweiten Quellcodeversion und der verschlüsselten Zeilen der zweiten verschlüsselten Quellcodeversion ermöglicht ist.

Durch die zeilenweise Verschlüsselung der ersten und zweiten Quellcodeversionen kann die Zeilenordnung der jeweiligen Quellcodeversionen beibehalten werden. Hierüber kann somit eine eindeutige zeilenweise Zuordnung der zweiten Quellcodeversion zu den jeweiligen Elementen des Maschinencodes über die beiden verschlüsselten Quellcodeversionen erreicht werden, indem, wie oben beschrieben, die verschlüsselten Zeilen der ersten und zweiten Quellcodeversionen miteinander verglichen und hierüber die jeweiligen Relationen zwischen der ersten Quellcodeversion und der zweiten Quellcodeversion ermittelt werden.

Dies erlaubt durch die Verschlüsselung der ersten Quellcodeversion eine erhöhte Datensicherheit, indem die auf der Steuereinheit des Automatisierungssystems gespeicherte erste Quellcodeidentität nicht durch unbeteiligte bzw. unbefugte Personen eingelesen werden kann und hierüber Rückschlüsse auf den ursprünglichen Quellcode gezogen werden können.

Durch die zeilenweise Verschlüsselung kann dennoch eine präzise Zuordnung zwischen den zwei verschiedenen Quellcodeversionen erreicht werden, sodass hierauf basierend eine präzise Zuordnung zwischen einzelnen Zeilen der zweiten Quellcodeversion und den jeweiligen Elementen des auf der Steuereinheit des Automatisierungssystems gespeicherten Maschinencodes erzielt werden kann.

Dies erlaubt ein problemloses Debugging des Steuerprogramms während des Betriebs des Automatisierungssystems basierend auf einer abgeänderten Quellcodeversion. Dies ermöglicht wiederum eine reibungslose und sichere Steuerung des Automatisierungssystems.

Nach einer Ausführungsform ist die Verschlüsselung der ersten und zweiten Quellcodeversionen als eine Binärverschlüsselung ausgebildet.

Hierdurch kann der technische Vorteil einer möglichst einfachen Verschlüsselung der ersten und zweiten Quellcodeversion erreicht werden.

Beispiele für eine Binärverschlüsselung sind die RSA-Verschlüsselung (Rivest-Shamir-Adleman) oder die AES-Verschlüsselung (Advanced Encrypted Standard). Die beiden Verschlüsselungen überführen Daten unter Verwendung eines Schlüssels in eine Form, die nur unter Kenntnis des Schlüssels einen Rückschluss auf die ursprünglichen Daten erlaubt. Bei symmetrischen Verschlüsselungen wird derselbe Schlüssel zum Verschlüsseln und Entschlüsseln verwendet. Bei asymmetrischen Verschlüsselungen werden hingegen für das Verschlüsseln und das Entschlüsseln separate und unterschiedliche Schlüssel verwendet.

Beide Verfahren betrachten als Eingabe eine Folge von Bytes und liefern eine (verschlüsselte/entschlüsselte) Folge von Bytes, wobei ein Byte eine Ganzzahl im Intervall [0..255] fasst.

Jeder Text wird als eine Folge von Bytes interpretiert und kann somit unmittelbar verschlüsselt werden. Das Ergebnis ist jedoch eine Folge von Bytes, die in der Regel keiner gültigen Textzeile entspricht.

Nach einer Ausführungsform umfasst das Vergleichen der ersten und zweiten verschlüsselten Quellcodeversionen im Identitätsgenerierungsschritt ein zeilenweises Vergleichen der verschlüsselten Zeilen der ersten und zweiten verschlüsselten Quellcodeversionen.

Hierdurch kann der technische Vorteil erreicht werden, dass durch das zeilenweise Vergleichen der verschlüsselten Zeilen der ersten und zweiten verschlüsselten Quellcodeversionen eine präzise Zuordnung zwischen den ersten und zweiten Quellcodeversionen innerhalb der Versionsidentität über die zeilenweise Zuordnung der verschlüsselten Zeilen der ersten und zweiten verschlüsselten Quellcodeversionen ermöglicht ist. Durch die präzise Zuordnung der einzelnen Zeilen der ersten und zweiten Quellcodeversionen zueinander ist eine Zuordnung der Zeilen der zweiten Quellcodeversion mit den Elementen des Maschinencodes ermöglicht. Durch die präzise Zuordnung kann ein problemloser Debugging-Vorgang ausgeführt werden.

Nach einer Ausführungsform wird eine Übereinstimmung einer Verschlüsselung einer Zeile der ersten verschlüsselten Quellcodeversion mit einer Verschlüsselung einer Zeile der zweiten verschlüsselten Quellcodeversion als eine vollständige Übereinstimmung der jeweiligen Zeilen der ersten und zweiten Quellcodeversionen interpretiert.

Hierdurch kann der technische Vorteil erreicht werden, dass eine präzise Zuordnung der Zeilen der ersten Quellcodeversion mit den Zeilen der zweiten Quellcodeversion über die beiden verschlüsselten Quellcodeversionen ermöglicht ist. Hierbei wird davon ausgegangen, dass bei identischem Inhalt zweier Zeilen eine identische Verschlüsselung generiert wird, während bei unterschiedlichem Inhalt der Zeilen eine unterschiedliche Verschlüsselung zu erwarten ist.

Bei dem Vergleich der verschlüsselten Zeilen der ersten verschlüsselten Quellcodeversion mit den verschlüsselten Zeilen der zweiten verschlüsselten Quellcodeversion kann somit bei Übereinstimmung zweier verschlüsselter Zeilen davon ausgegangen werden, dass die jeweils unverschlüsselten Zeilen der beiden Quellcodeversionen ebenfalls übereinstimmen.

Analog kann bei Abweichung von verschlüsselten Zeilen davon ausgegangen werden, dass die jeweils unverschlüsselten Inhalte der Zeilen der beiden Quellcodeversionen ebenfalls voneinander abweichen. Dies ermöglicht eine präzise Zuordnung der beiden Quellcodeversionen und damit verbunden eine präzise zeilenweise Zuordnung der zweiten Quellcodeversion mit dem Maschinencode.

Nach einer Ausführungsform ist die Binärverschlüsselung als ein Hash-Wert der jeweiligen Zeile ausgebildet.

Hierdurch kann der technische Vorteil erreicht werden, dass eine möglichst einfache Verschlüsselung der Quellcodeversionen erreicht werden kann.

Ein Hash-Wert kann beispielsweise durch eine zeilenweise Anwendung einer Funktion auf die erste Quellcodeversion zum zeilenweisen Berechnen von Hash-Werten für die einzelnen Zeilen der Quellcodeversion bestimmt werden. Eine solche Funktion kann beispielsweise durch eine sichere Hash-Funktion, wie SHA-256, gegeben sein.

Nach einer Ausführungsform sind die erste Maschinencode-Quellcode-Relation und die erste Quellcodeidentität auf einer Steuereinheit des Automatisierungssystems gespeichert, wobei der Empfangsschritt ein Kopieren der ersten Maschinencode-Quellcode-Relation und der Quellcodeidentität von der Steuereinheit auf das Entwicklungssystem umfasst.

Hierdurch kann der technische Vorteil erreicht werden, dass die auf der Steuereinheit des Automatisierungssystems gespeicherte Maschinencode-Quellcode-Relation bzw. erste Quellcodeidentität für den auf dem Entwicklungssystem durchzuführenden Debugging-Vorgang bereitgestellt werden kann.

Nach einer Ausführungsform umfasst das Verfahren ferner:
Bereitstellen einer Übereinstimmungsinformation bezüglich einer Abweichung und/oder Übereinstimmung der ersten Quellcodeversion und der zweiten Quellcodeversion basierend auf dem Vergleich zwischen den ersten und zweiten verschlüsselten Quellcodeversionen in einem Informationsbereitstellungsschritt.

Hierdurch kann der technische Vorteil erreicht werden, dass über die Übereinstimmungsinformation, die dem Entwickler in dem Entwicklungssystem bereitgestellt wird, dem Entwickler präzise Informationen bezüglich Übereinstimmungen bzw. Abweichungen der von ihm behandelten zweiten Quellcodeversion mit der zum jeweils vorliegenden Maschinencode korrespondierenden ersten Quellcodeversion bereitgestellt werden können.

Während des Entwicklungsprozesses basierend auf der zweiten Quellcodeversion liegt dem Entwickler für gewöhnlich die erste Quellcodeversion nicht vor. Durch die bereitgestellte Übereinstimmungsinformation kann der Entwickler somit direkt Unterschiede bzw. Übereinstimmungen der beiden Quellcodeversionen herausfinden und dementsprechend den Debugging-Vorgang anpassen. Beispielsweise könnte der Entwickler bei Berücksichtigung der Übereinstimmungsinformation davon absehen, während des Debugging-Vorgangs Haltepunkte in Zeilen der zweiten Quellcodeversion zu platzieren, die gegenüber der ersten Quellcodeversion abgeändert wurden. Dies erleichtert den Debugging-Vorgang und beschleunigt den Entwicklungsprozess.

Nach einer Ausführungsform markiert die Übereinstimmungsinformation Zeilen in der zweiten Quellcodeversion, die in der zweiten Quellcodeversion gegenüber der ersten Quellcodeversion gelöscht oder hinzugefügt worden sind.

Hierdurch kann der technische Vorteil erreicht werden, dass durch die Markierung der hinzugefügten bzw. gelöschten Zeilen innerhalb der zweiten Quellcodeversion gegenüber der ersten Quellcodeversion dem Entwickler unmittelbar Änderungen in der zweiten Quellcodeversion angezeigt werden können, sodass diese während des Entwicklungsprozesses berücksichtigt werden können.

Nach einer Ausführungsform wird die Übereinstimmungsinformation in dem Entwicklungssystem einem Nutzer zum Durchführen des Debugging-Vorgangs angezeigt.

Hierdurch kann der technische Vorteil erreicht werden, dass der Entwicklungsprozess vereinfacht bzw. beschleunigt werden kann, indem der Entwickler unmittelbar die Änderungen einsehen kann. Hierüber kann ferner die Qualität des Steuerprogramms erhöht werden, indem präzisere Debugging-Vorgänge und effizientere Entwicklungsprozesse ermöglicht sind.

Nach einer Ausführungsform umfasst der Identitätsgenerierungsschritt:
Zuordnen von ersten Dateien, die Zeilen der ersten Quellcodeversion und/oder Zeilen der ersten verschlüsselten Quellcodeversion umfassen, zu zweiten Dateien, die Zeilen der zweiten Quellcodeversion und/oder Zeilen der zweiten verschlüsselten Quellcodeversion umfassen, in einem Dateizuordnungsschritt, wobei jeder ersten Datei maximal eine zweite Datei und jeder zweiten Datei maximal eine erste Datei zugeordnet werden; und
Vergleichen der Zeilen der ersten Quellcodeversion und/oder der ersten verschlüsselten Quellcodeversion der ersten Dateien mit Zeilen der zweiten Quellcodeversion und/oder der zweiten verschlüsselten Quellcodeversion der entsprechend zugeordneten zweiten Dateien in einem Dateivergleichsschritt.

Hierdurch kann der technische Vorteil erreicht werden, dass über die Zuordnung der Dateien die ersten bzw. zweiten Quellcodeversionen gespeichert sind und durch die entsprechenden Vergleiche der jeweils die ersten bzw. zweiten Quellcodeversionen umfassenden Dateien eine präzise Zuordnung der einzelnen Zeilen der ersten und zweiten Quellcodeversion zueinander und damit verbunden eine präzise Versionsidentität zwischen den beiden ersten und zweiten Quellcodeversionen ermöglicht ist. Dies erlaubt einen präzisen Debugging-Vorgang und verbessert den Entwicklungsprozess, was wiederum zu verbesserten und gegebenenfalls sichereren Steuerprogrammen des Automatisierungssystems führen kann.

Nach einer Ausführungsform erfolgt das Zuordnen der ersten und zweiten Dateien im Dateizuordnungsschritt basierend auf Dateipfaden der jeweiligen ersten und zweiten Dateien oder über eine Ähnlichkeit der Zeilen und/oder der verschlüsselten Zeilen der ersten und zweiten Dateien, wobei die Ähnlichkeit durch Ausführen eines Verfahrens zur Bestimmung der längsten gemeinsamen Teilsequenz (Longest Common Subsequence - LCS) auf die in den ersten und zweiten Dateien gespeicherten Zeilen der ersten und zweiten Quellcodeversionen und/oder der ersten und zweiten verschlüsselten Quellcodeversionen bewirkt wird.

Hierdurch kann der technische Vorteil erreicht werden, dass eine präzise Zuordnung der verschiedenen Dateien bzw. ein präziser Vergleich der Dateien ermöglicht ist.

Nach einer Ausführungsform erfolgt das Vergleichen der Inhalte der einander zugeordneten ersten und zweiten Dateien durch Ausführung des Verfahrens zur Bestimmung der längsten gemeinsamen Teilsequenz auf die Inhalte der ersten und zweiten Dateien.

Hierdurch kann der technische Vorteil erreicht werden, dass durch Ausführung des Verfahrens zur Bestimmung der längsten gemeinsamen Teilsequenz eine präzise Zuordnung der verschlüsselten Zeilen der ersten verschlüsselten Quellcodeversion und der verschlüsselten Zeilen der zweiten verschlüsselten Quellcodeversion ermöglicht ist. Ein Entschlüsseln der verschlüsselten Zeilen zum Erstellen der Zuordnung zwischen den verschiedenen Quellcodeversionen ist hierdurch nicht erforderlich.

Nach einer Ausführungsform umfasst das Ausführen des Debugging-Vorgangs:
Bei Empfangen eines Haltepunktbefehls des Nutzers zum Setzen eines Haltepunkts innerhalb der in dem Entwicklungssystem ausgeführten zweiten Quellcodeversion:
Abbilden einer Zeile in der zweiten Quellcodeversion, in der der Haltepunkt zu setzen ist, auf eine Adresse des Maschinencodes basierend auf der zweiten Maschinencode-Quellcode-Relation in einem Abbildungsschritt;
Bewirken eines Halts in einer Ausführung des Maschinencodes durch die Steuereinheit an einer für den Haltepunkt identifizierten Adresse des Maschinencodes in einem Programmhalteschritt; und
Abbilden der Adresse des Maschinencodes, an der die Ausführung des Maschinencodes angehalten ist, auf die jeweilige Zeile der zweiten Quellcodeversion basierend auf der zweiten Maschinencode-Quellcode-Relation in einem weiteren Abbildungsschritt; und Anzeigen der Zeile der zweiten Quellcodeversion, in der die Ausführung des Maschinencodes gestoppt ist, in der Entwicklungsumgebung in einem Anzeigeschritt.

Hierdurch kann der technische Vorteil erreicht werden, dass ein präziser Debugging-Vorgang ermöglicht ist. Beim Setzen von Haltepunkten innerhalb der zweiten Quellcodeversion kann über die oben beschriebene Zuordnung zwischen den Zeilen der zweiten Quellcodeversion und den entsprechenden Elementen des Maschinencodes eine präzise Ausführung des Maschinencodes und ein Anhalten der Ausführung des Steuerprogramms an den dafür vorgesehenen Stellen bewirkt werden.

Nach einem weiteren Aspekt wird ein Automatisierungssystem mit einer Steuereinheit und einem Entwicklungssystem bereitgestellt, wobei das Automatisierungssystem eingerichtet ist, das Verfahren zum Ausführen eines Debugging-Vorgangs eines Steuerprogramms eines Automatisierungssystems nach einer der voranstehenden Ausführungsformen auszuführen.

Die Erfindung wird anhand der beigefügten Figuren näher erläutert. Hierbei zeigen:
- Fig. 1: eine schematische Darstellung eines Automatisierungssystems;
- Fig. 2: ein Flussdiagramm eines Verfahrens zum Ausführen eines Debugging-Vorgangs gemäß einer Ausführungsform;
- Fig. 3: ein weiteres Flussdiagramm eines Verfahrens zum Ausführen eines Debugging-Vorgangs gemäß einer weiteren Ausführungsform;
- Fig. 4: ein weiteres Flussdiagramm eines Verfahrens zum Ausführen eines Debugging-Vorgangs gemäß einer weiteren Ausführungsform; und
- Fig. 5: ein weiteres Flussdiagramm eines Verfahrens zum Ausführen eines Debugging-Vorgangs gemäß einer weiteren Ausführungsform.

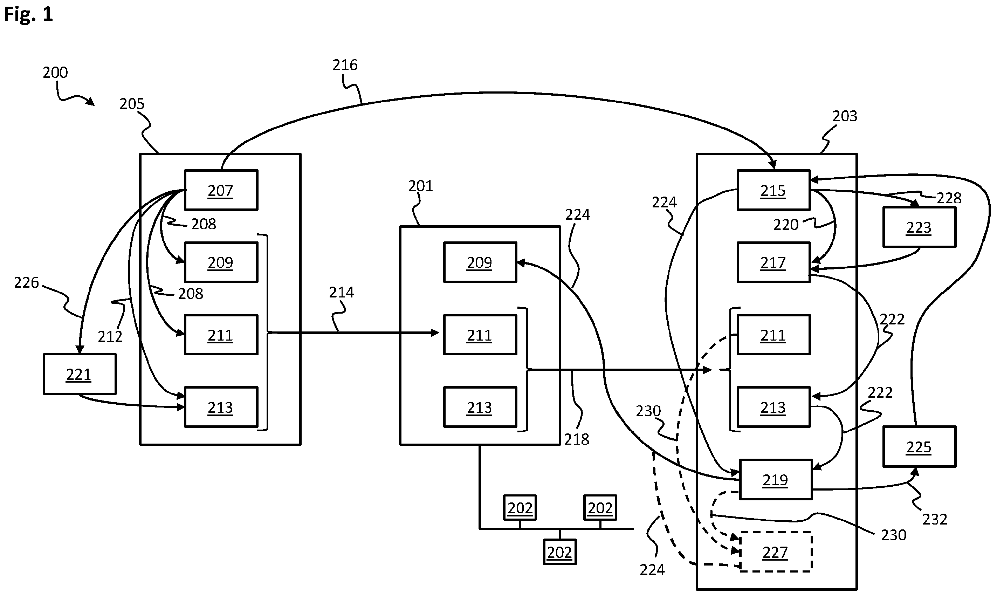

Fig. 1 zeigt eine schematische Darstellung eines Automatisierungssystems 200.

Das gezeigte Automatisierungssystem 200 umfasst eine Steuereinheit 201 zum Ausführen eines Steuerprogramms und zum Steuern eines Automatisierungsprozesses und eine Mehrzahl von mit der Steuereinheit 201 verbundenen Sensor-/Aktoreinheiten 202 zum Ausführen des Automatisierungsprozesses.

Das Automatisierungssystem 200 umfasst in der gezeigten Ausführungsform ferner zwei Entwicklungssysteme 203, 205 zum Entwickeln von Steuerprogrammen für das Automatisierungssystem 200.

Fig. 1 stellt einen zeitlichen Ablauf eines Entwicklungsvorgangs eines Steuerprogramms für ein Automatisierungssystem 200 da. In diesem zeitlichen Ablauf, werden durch die zwei gezeigten Entwicklungssysteme 203, 205 zu unterschiedlichen Zeiten verschiedene, unten detailliert beschriebene Vorgänge zur Entwicklung des Steuerprogramms ausgeführt. Die durch das Entwicklungssystem 203 ausgeführten Vorgänge werden hierbei zu einem zeitlichen späteren Zeitpunkt ausgeführt als die durch das weitere Entwicklungssystem 205 ausgeführten Vorgänge.

Die beiden gezeigten Entwicklungssysteme 203, 205 können reell verschiedene Entwicklungssysteme darstellen, die beispielsweise von unterschiedlichen Entwicklern und zu unterschiedlichen Zeitpunkten bedient werden. Hierdurch wird der Fall ausgedrückt, dass verschiedene Entwickler simultan an einer Entwicklung eines gemeinsamen Steuerprogramms mitwirken und zu unterschiedlichen Zeitpunkten Änderungen an einem gemeinsam bearbeiteten Quellcode des Steuerprogramms vornehmen.

Alternativ können die gezeigten zwei Entwicklungssysteme 203, 205 ein reell identisches Entwicklungssystem zu unterschiedlichen Zeitpunkten darstellen. Hierdurch wird der Fall ausgedrückt, dass während eines Entwicklungsprozesses durch einen Entwickler über das jeweilige Entwicklungssystem unterschiedliche Quellcodeversionen generiert werden. Das weitere Entwicklungssystem 205 beschreibt hierbei in Fig. 1 das Entwicklungssystem 203 zu einem zeitlich früheren Zeitpunkt.

Im Folgenden werden anhand der gezeigten Fig. 1 verschiedene Schritte des erfindungsgemäßen Verfahrens zum Ausführen eines Debugging-Vorgangs eines Steuerprogramms für ein Automatisierungssystem 200 illustriert.

Zunächst wird auf dem gezeigten Entwicklungssystem 205 durch einen Entwickler während eines Entwicklungsvorgangs eine erste Version eines Quellcodes 207 des zu programmierenden Steuerprogramms generiert. In einem Übersetzungsvorgang 208 wird basierend auf der ersten Quellcodeversion 207 ein entsprechender Maschinencode 209 des programmierten Steuerprogramms generiert.

Ferner wird während des Übersetzungsvorgangs 208 eine erste Maschinencode-Quellcode-Relation 211 generiert. Die erste Maschinencode-Quellcode-Relation 211 beschreibt hierbei Zuordnungen zwischen Zeilen der ersten Quellcodeversion 207 und entsprechenden Elementen des Maschinencodes 209.

In einem ersten Zeilenidentifizierungsvorgang 212 wird ferner eine erste Quellcodeidentität 213 generiert. Die erste Quellcodeidentität 213 umfasst hierbei Informationen bezüglich der ersten Quellcodeversion 207, wobei die Information der ersten Quellcodeidentität 213 eine Identifikation einzelner Zeilen der ersten Quellcodeversion 207 ermöglicht.

Die erste Quellcodeidentität 213 umfasst die vollständige erste Quellcodeversion 207 oder Teile der ersten Quellcodeversion 207.

Das Generieren der ersten Quellcodeidentität 213 kann durch eine entsprechend eingerichtete Funktion oder einen entsprechend eingerichteten Algorithmus bewirkt werden. Die Funktion bzw. der Algorithmus ist hierbei eingerichtet, die Zeilen der ersten Quellcodeversion 207 einzulesen und entsprechende Identifikationsinformation der jeweiligen Zeilen auszugeben.

Alternativ oder zusätzlich hierzu kann über einen ersten Verschlüsselungsvorgang 226 eine Verschlüsselung der ersten Quellcodeversion 207 vorgenommen werden und eine erste verschlüsselte Quellcodeversion 221 erstellt werden.

Die Verschlüsselung kann hierbei zeilenweise ausgeführt werden, indem einzelne Zeilen der ersten Quellcodeversion 207 verschlüsselt werden und entsprechende verschlüsselte Zeilen der ersten verschlüsselten Quellcodeversion 221 generiert werden.

Die zeilenweise Verschlüsselung kann durch eine entsprechend eingerichtete Verschlüsselungsfunktion oder einen entsprechend eingerichteten Verschlüsselungsalgorithmus bewirkt werden. Die Funktion bzw. der Algorithmus sind hierbei eingerichtet, die einzelnen Zeilen der ersten Quellcodeversion einzeln zu verschlüsseln und entsprechende verschlüsselte Zeilen zu generieren.

Die zeilenweise Aufteilung der ersten Quellcodeversion 207 wird hierbei durch die zeilenweise Verschlüsselung innerhalb der ersten verschlüsselten Quellcodeversion 221 beibehalten. Die Anzahl der Zeilen der ersten verschlüsselten Quellcodeversion 221 entspricht hierbei der Anzahl der Zeilen der ersten Quellcodeversion 207. Eine i-te Zeile der ersten verschlüsselten Quellcodeversion 221 entspricht hierbei einer Verschlüsselung einer i-ten Zeile der ersten Quellcodeversion 207. Die erste Quellcodeidentität 213 kann in diesem Fall die erste verschlüsselte Quellcodeversion 221 umfassen.

In einem Installationsvorgang 214 werden erfindungsgemäß der über den Übersetzungsvorgang 208 generierte Maschinencode 209, die ebenfalls über den Übersetzungsvorgang 208 generierte erste Maschinencode-Quellcode-Relation 211 und die über den ersten Zeilenidentifizierungsvorgang 212 bzw. die über den ersten Verschlüsselungsvorgang 226 generierte erste Quellcodeidentität 213 auf der Steuereinheit 201 des Automatisierungssystems 200 installiert.

Die Installation des Maschinencodes 209, der ersten Maschinencode-Quellcode-Relation 211 und der ersten Quellcodeidentität 213 auf der Steuereinheit 201 wird durch eine entsprechend eingerichtete Installationsfunktion bzw. einen entsprechend eingerichteten Installationsalgorithmus bewirkt.

Die Steuereinheit 201 des Automatisierungssystems 200 kann hierbei beispielsweise bei einem Kunden und einem Nutzer des Automatisierungssystems 200 eingerichtet sein. Durch die Verschlüsselung der ersten Quellcodeversion 207 und die entsprechend generierte erste verschlüsselte Quellcodeversion 221 kann die Information des Quellcodes innerhalb der auf der Steuereinheit 201 des Nutzers installierten ersten Quellcodeidentität 213 durch unbefugte Personen nicht eingelesen werden.

Fig. 1 zeigt nun den Fall, dass durch einen Quellcodeänderungsvorgang 216, der durch einen Entwickler durch Programmieren und Vornehmen von Änderungen in der ersten Quellcodeversion 207 durchgeführt wird, die erste Quellcodeversion 207 in eine zweite Quellcodeversion 215 abgeändert ist. Dies kann beispielsweise durch Hinzufügen oder Löschen einzelner Zeilen der ersten Quellcodeversion 207 erfolgt sein.

In der gezeigten Graphik wird der Quellcodeänderungsvorgang 216 bzw. die darauffolgenden auf der geänderten zweiten Quellcodeversion 215 ausgeführten Vorgänge durch das Entwicklungssystem 203 ausgeführt. Wie bereits erwähnt können die beiden Entwicklungssysteme 203, 205 zwei real verschiedene Entwicklungssysteme sein, die beispielsweise von unterschiedlichen Entwicklern während eines simultanen Entwicklungsvorgangs des gleichen Steuerprogramms ausgeführt werden.

Alternativ können die Entwicklungssysteme 203, 205 ein real identisches Entwicklungssystem darstellen, das lediglich zu unterschiedlichen Zeitpunkten ausgeführt wird.

Zum Ausführen des Debugging-Vorgangs 224 basierend auf der in Bezug auf die erste Quellcodeversion 207 abgeänderten zweiten Quellcodeversion 215 wird zunächst in einem Kopiervorgang 218 die erste Maschinencode-Quellcode-Relation 211 und die erste Quellcodeidentität 213 von der Steuereinheit 201 auf das Entwicklungssystem 203 kopiert.

Das Kopieren kann durch eine entsprechend eingerichtete Kopierfunktion oder einen entsprechend eingerichteten Kopieralgorithmus ausgeführt werden.

Ferner wird in einem zweiten Zeilenidentifizierungsvorgang 220 basierend auf der zweiten Quellcodeversion 215 eine zweite Quellcodeidentität 217 generiert.

Die zweite Quellcodeidentität 217 umfasst hierbei analog zur ersten Quellcodeidentität 213 die vollständige zweite Quellcodeversion 215 oder Teile der zweiten Quellcodeversion 215.

Das Generieren der zweiten Quellcodeidentität 217 kann durch eine entsprechend eingerichtete Funktion oder einen entsprechend eingerichteten Algorithmus bewirkt werden. Die Funktion bzw. der Algorithmus sind hierbei eingerichtet, die zweite Quellcodeversion 215 einzulesen, einzelne Zeilen zu identifizieren und entsprechende Zeileninformation zu generieren.

Alternativ oder zusätzlich kann in einem zweiten Verschlüsselungsvorgang 228 basierend auf der zweiten Quellcodeversion 215 eine zweite verschlüsselte Quellcodeversion 223 erstellt werden.

Die Verschlüsselung kann wiederum durch eine entsprechend eingerichtete Verschlüsselungsfunktion oder einen entsprechend eingerichteten Verschlüsselungsalgorithmus bewirkt werden.

Die zweite Quellcodeidentität 217 kann hierbei die zweite verschlüsselte Quellcodeversion 223 umfassen. Die Verschlüsselung kann wiederum zeilenweise erfolgen, sodass die Zeilenaufteilung der zweiten Quellcodeversion 215 in der zweiten verschlüsselten Quellcodeversion 223 beibehalten wird und die zweite verschlüsselte Quellcodeversion 223 verschlüsselte Zeilen aufweist, die jeweils den unverschlüsselten Zeilen der zweiten Quellcodeversion 215 zugeordnet werden können.

Die erste Quellcodeidentität 213 und die zweite Quellcodeidentität 217 werden vorzugsweise auf eine identische Weise generiert. Die jeweiligen Relationen innerhalb der Quellcodeidentitäten 213, 217 werden herbei unter gleichen Gesichtspunkten bewirkt, sodass eine Vergleichbarkeit der beiden Quellcodeidentitäten 213, 217 besteht.

Die Verschlüsselung in den ersten und zweiten Verschlüsselungsvorgängen 226, 228 kann beispielsweise als eine Binärverschlüsselung ausgebildet sein. Die Binärverschlüsselung kann beispielsweise durch Hash-Werte gegeben werden, indem für einzelne Zeilen der ersten und zweiten Quellcodeversionen 207, 215 entsprechende Hash-Werte berechnet werden. Die verschlüsselten Zeilen der ersten und zweiten verschlüsselten Quellcodeversionen 221, 223 können hierbei jeweils in zeilenweise berechneten Hash-Werten dargestellt sein.

In einem Identitätsgenerierungsvorgang 222 wird basierend auf der zweiten Quellcodeidentität 217 und der ersten Quellcodeidentität 213 eine Versionsidentität 219 generiert. Die Versionsidentität 219 beschreibt hierbei Zuordnungen zwischen den Zeilen der ersten Quellcodeversion 207 und den Zeilen der zweiten Quellcodeversion 215.

Die Versionsidentität 219 beschreibt, welche Zeilen der zweiten Quellcodeversion 215 den Zeilen der ersten Quellcodeversion 207 entsprechen bzw. kennzeichnet die Zeilen der zweiten Quellcodeversion 215, die durch Änderungen und/oder Ergänzungen bzw. Hinzufügungen im Quellcodeänderungsvorgang 216 keine Entsprechung der ersten Quellcodeversion 207 aufweisen.

Ferner kann die Versionsidentität 219 die Zeilen der ersten Quellcodeversion 207 kennzeichnen, die aufgrund von Löschungen und/oder Änderungen während des Quellcodeänderungsvorgangs 216 keine Entsprechung zu der zweiten Quellcodeversion 215 aufweisen.

Die Versionsidentität 219 wird hierbei durch einen Vergleich der ersten und zweiten Quellcodeidentitäten 213, 217 miteinander generiert. Umfassen die ersten und zweiten Quellcodeidentitäten 213, 217 die durch die Verschlüsselungsvorgänge 226, 228 generierten ersten und zweiten verschlüsselten Quellcodeversionen 221, 223, umfasst das Vergleichen der ersten und zweiten Quellcodeidentitäten 213, 217 ein Vergleichen der verschlüsselten Zeilen der ersten und zweiten verschlüsselten Quellcodeversionen 221, 223.

Das Generieren der Versionsidentität 219 kann durch eine entsprechend eingerichtete Funktion oder einen entsprechend eingerichteten Algorithmus bewirkt werden. Die Funktion bzw. der Algorithmus sind hierbei eingerichtet, die ersten und zweiten Quelltextversionen 207, 215 einzulesen und Zeilen der ersten Quelltextversion 207 zu identifizieren, die in der zweiten Quelltextversion 215 unverändert enthalten sind. Zusätzlich kann die Funktion bzw. der Algorithmus eingerichtet sein, Zeilen der zweiten Quelltextversion zu identifizieren, die in der ersten Quelltextversion 207 nicht vorkommen, und/oder Zeilen der ersten Quelltextversion 207 zu identifizieren, die in der zweiten Quelltextversion 215 unverändert nicht vorkommen.

Die Funktion bzw. der Algorithmus kann alternativ oder zusätzlich eingerichtet sein, auf die ersten und zweiten verschlüsselten Quelltextversionen 221, 223 angewendet zu werden und verschlüsselte Zeilen der ersten verschlüsselten Quelltextversion 221 zu identifizieren, die in der zweiten verschlüsselten Quelltextversion 223 unverändert vorkommen, oder nicht vorkommen, bzw. verschlüsselte Zeilen der zweiten verschlüsselten Quelltextversion 223 zu identifizieren, die keine Entsprechung in der ersten verschlüsselten Quelltextversion 221 haben.

Eine Entschlüsselung der verschlüsselten Zeilen der ersten und zweiten verschlüsselten Quellcodeversionen 221, 223 ist hierbei nicht notwendig.

Stattdessen wird davon ausgegangen, dass bei einer zeilenweisen Verschlüsselung der Zeilen der ersten und zweiten Quellcodeversionen 207, 215 bei Zeilen mit identischem Inhalt eine identische Verschlüsselung der Zeilen bewirkt wird, während bei Zeilen mit unterschiedlichem Inhalt die verschlüsselten Zeilen ebenfalls einen unterschiedlichen verschlüsselten Wert aufweisen.

Hierbei werden die Verschlüsselungen der ersten und zweiten Quellcodeversionen 207, 215 in den beiden Verschlüsselungsvorgängen 226, 228 mittels des gleichen Verschlüsselungsschlüssels ausgeführt.

Bei Verschlüsselung der einzelnen Zeilen durch Berechnung eines Hash-Werts wird dementsprechend davon ausgegangen, dass für Zeilen mit identischem Inhalt der gleiche Hash-Wert berechnet wird, während Zeilen unterschiedlichen Inhalts zu unterschiedlichen Hash-Werten führen.

Das Vergleichen der verschlüsselten Zeilen der ersten und zweiten verschlüsselten Quellcodeversionen 221, 223 der ersten und zweiten Quellcodeidentitäten 213, 217 kann beispielsweise durch Ausführen eines Verfahrens zur Bestimmung der längsten gemeinsamen Teilsequenz (Longest Common Subsequence - LCS), wie es Teil eines Differenzwerkzeugs (diff) ist, bewirkt werden. Hierzu kann ein aus dem Stand der Technik bekanntes Verfahrens zur Bestimmung der längsten gemeinsamen Teilsequenz angewendet und auf die jeweils verschlüsselten Zeilen der ersten und zweiten verschlüsselten Quellcodeversionen 221, 223 ausgeführt werden, um hierüber die oben genannten Zuordnungen zwischen den verschlüsselten Zeilen der ersten und zweiten verschlüsselten Quellcodeversionen 221, 223 zu ermitteln.

Basierend auf der ersten Maschinencode-Quellcode-Relation 211 und der generierten Versionsidentität 219 wird eine zweite Maschinencode-Quellcode-Relation 227 in einem Relationsgenerierungsvorgang 230 ermittelt. Durch die strichlinierte Darstellung ist illustriert, dass zur Ermittlung der zweiten Maschinencode-Quellcode-Relation 227 es optional ist, eine entsprechende Datei zu generieren, die die angesprochene zweite Maschinencode-Quellcode-Relation 227 umfasst.

Die zweite Maschinencode-Quellcode-Relation 227 kann durch eine entsprechend eingerichtete Funktion oder einen entsprechend eingerichteten Algorithmus ausgeführt werden. Die Funktion bzw. der Algorithmus kann hierbei eingerichtet sein, die erste Maschinencode-Quellcode-Relation 211 und die Versionsidentität 219 einzulesen, aus der erste Maschinencode-Quellcode-Relation 211 zu ermitteln, welche Zeilen der ersten Quellcodeversion 207 welchen Codeelementen des Maschinencodes 209 entsprechen. Die Funktion bzw. der Algorithmus ist ferner eingerichtet, die Versionsidentität 219 einzulesen und zu ermitteln, welche Zeilen der ersten Quellcodeversion 207 welchen Zeilen der zweiten Quellcodeversion 215 entsprechen. Die Funktion bzw. der Algorithmus ist ferner eingerichtet, basierend auf der Information der ersten Maschinencode-Quellcode-Relation 211 und der Versionsidentität 219 zu ermitteln, welche Zeilen der zweiten Quellcodeversion 215 welchen Codeelementen des Maschinencodes 209 entsprechen und entsprechende Relationen aufzustellen. Die Relationen können als zweite Maschinencode-Quellcode-Relation 227 in einer entsprechenden Datei gespeichert werden.

Alternativ hierzu können die in der zweiten Maschinencode-Quellcode-Relation 227 beschriebenen Zuordnungen zwischen den Zeilen der zweiten Quellcodeversion 215 und den jeweiligen Elementen des Maschinencodes 209 ohne Speicherung in einer entsprechenden Datei jeweils nur für die jeweilige Ausführung des Debugging-Vorgangs 224 für die jeweiligen Zeilen der zweiten Quellcodeversion 215 ermittelt werden.

Zur Ermittlung der Zuordnungen zwischen den Zeilen der zweiten Quellcodeversion 215 und den entsprechenden Elementen des Maschinencodes 209 werden zunächst basierend auf der Versionsidentität 219 die Zuordnungen zwischen den Zeilen der zweiten Quellcodeversion 215 und den Zeilen der ersten Quellcodeversion 207 ermittelt.

Diese Zuordnungen können, wie bereits beschrieben, indirekt über die jeweiligen verschlüsselten Zeilen der zweiten verschlüsselten Quellcodeversionen 221, 223 bewirkt werden, indem zunächst die Zuordnungen zwischen den verschlüsselten Zeilen der ersten und zweiten verschlüsselten Quellcodeversionen 221, 223 ermittelt werden und darauf basierend die Zuordnungen zwischen den entsprechenden unverschlüsselten Zeilen der ersten und zweiten Quellcodeversionen 207, 215 ermittelt werden.

Basierend auf den ermittelten Zuordnungen zwischen den Zeilen der ersten und zweiten Quellcodeversionen 207, 215 der Versionsidentität 219 können unter Berücksichtigung der ersten Maschinencode-Quellcode-Relation 211, die definiert, welche Zeilen der ersten Quellcodeversion 207 mit welchen Elementen des Maschinencodes 209 korrespondieren, die entsprechenden Zuordnungen zwischen den Zeilen der zweiten Quellcodeversion 215 und den jeweiligen Elementen des Maschinencodes 209 in Form der zweiten Maschinencode-Quellcode-Relation 227 ermittelt werden.

Basierend auf der Versionsidentität 219 und unter Berücksichtigung der zweiten Maschinencode-Quellcode-Relation 227 kann im Folgenden der Debugging-Vorgang 224 des Steuerprogramms basierend auf der zweiten Quellcodeversion 215 und dem auf der Steuereinheit 201 gespeicherten Maschinencode 209 ausgeführt werden.

Durch die Berücksichtigung der zweiten Maschinencode-Quellcode-Relation 227 kann trotz Abweichungen der zweiten Quellcodeversion 215 von der ersten Quellcodeversion 207 basierend auf der zweiten Quellcodeversion 215 die Ausführung des Maschinencodes 209 bewirkt und zusätzlich im Debugging-Vorgang 224 nachvollzogen werden.

So können, wie in Debugging-Vorgängen üblich, Haltepunkte innerhalb der zweiten Quellcodeversion 215 gesetzt werden und unter Berücksichtigung der zweiten Maschinencode-Quellcode-Relation 227 das Steuerprogramm basierend auf dem Maschinencode 209 an den gewünschten Stellen angehalten werden.

Zur besseren Identifizierung der Änderungen der zweiten Quellcodeversion 215 in Bezug auf die erste Quellcodeversion 207 kann in einem Übereinstimmungsbereitstellungsvorgang 232 eine Übereinstimmungsinformation 225 bereitgestellt werden. Die Übereinstimmungsinformation 225 stellt hierbei Übereinstimmungen bzw. Änderungen zwischen der zweiten Quellcodeversion 215 in Bezug auf die erste Quellcodeversion 207 bereit.

Die Übereinstimmungsinformation 225 kann dem Entwickler in dem Entwicklungssystem 203 beispielsweise durch Markierungen der übereinstimmenden bzw. geänderten Zeilen der zweiten Quellcodeversion 215 visuell angezeigt werden.

Das Generieren und Bereitstellen der Übereinstimmungsinformation 225 kann durch eine entsprechend eingerichtete Funktion bzw. einen entsprechend eingerichteten Algorithmus ausgeführt werden. Die Funktion bzw. der Algorithmus ist hierbei eingerichtet, die Versionsidentität 219 einzulesen und hierauf basierend Übereinstimmungen und/oder Abweichungen von Zeilen der ersten Quelltextversion 207 und der zweiten Quelltextversion 215 zu ermitteln und diese Information in der Übereinstimmungsinformation 225 bereitzustellen.

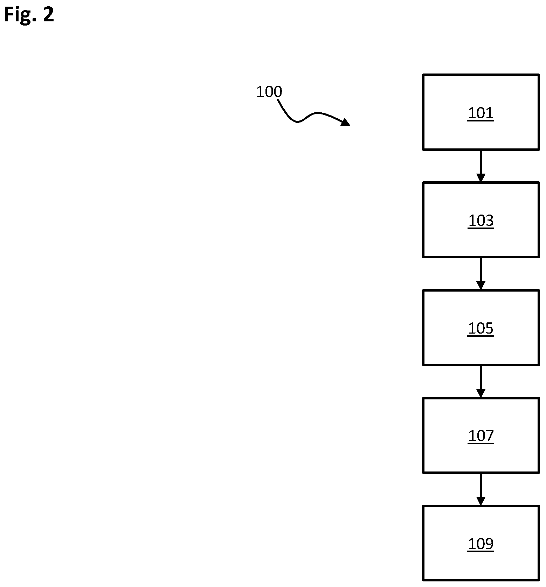

Fig. 2 zeigt ein Flussdiagramm eines Verfahrens 100 zum Ausführen eines Debugging-Vorgangs 224 gemäß einer Ausführungsform.

Zum Ausführen eines Debugging-Vorgangs 224 werden in einem Empfangsschritt 101 zunächst eine erste Maschinencode-Quellcode-Relation 211 und eine erste Quellcodeidentität 213 durch ein Entwicklungssystem 203 empfangen. Hierzu kann ein Kopiervorgang 218 ausgeführt werden, bei dem die erste Maschinencode-Quellcode-Relation 211 und die erste Quellcodeidentität 213 auf das Entwicklungssystem 203 kopiert werden. Dieses Kopieren kann durch eine entsprechend zum Kopieren von Daten eingerichtete Funktion realisiert werden. Wie in Fig. 1 beschrieben können die erste Maschinencode-Quellcode-Relation 211 und die erste Quellcodeidentität 213 zuvor auf einer Steuereinheit 201 eines Automatisierungssystems 200 gespeichert sein.

Wie ebenfalls bereits zu Fig. 1 beschrieben, beschreibt die erste Maschinencode-Quellcode-Relation 211 Zuordnungen zwischen Zeilen einer ersten Version eines Quellcodes 207 eines Steuerprogramms des Automatisierungssystems 200 und Elementen eines dazugehörigen Maschinencodes 209.

Die erste Quellcodeidentität 213 umfasst hingegen Informationen bezüglich der ersten Quellcodeversion 207, die Identifizierungen einzelner Zeilen der ersten Quellcodeversion 207 erlauben.

Die erste Quellcodeidentität 213 kann gemäß einer Ausführungsform die erste Quellcodeversion 207 bzw. Teile der ersten Quellcodeversion 207 umfassen.

In einem Quellcodevergleichsschritt 103 wird die kopierte erste Quellcodeidentität 213 mit einer zweiten Quellcodeidentität 217 einer auf dem Entwicklungssystem 203 ausgeführten zweiten Quellcodeversion 215 verglichen. Die zweite Quellcodeidentität 217 basiert hierbei auf der zweiten Quellcodeversion 215 und kann die zweite Quellcodeversion 215 vollständig oder Teile der zweiten Quellcodeversion 215 umfassen.

Wie oben bereits beschrieben, basiert die zweite Quellcodeversion 215 auf der ersten Quellcodeversion 207 und ist aus dieser durch Quellcodeänderungen in Form von Hinzufügen bzw. Löschen einzelner Zeilen des Quellcodes hervorgegangen.

Das Vergleichen der ersten und zweiten Quellcodeidentitäten 213, 217 kann zeilenweise erfolgen, wobei durch das Vergleichen ermittelt wird, welche Zeilen der zweiten Quellcodeversion 215 mit Zeilen der ersten Quellcodeversion 207 übereinstimmen bzw. welche Zeilen keine Entsprechung der ersten Quellcodeversion 207 aufweisen.

In einem Identitätsgenerierungsschritt 105 wird basierend auf den Vergleichen zwischen den ersten und zweiten Quellcodeidentitäten 213, 217 eine Versionsidentität 219 generiert. Die Versionsidentität 219 beschreibt hierbei Zuordnungen zwischen Zeilen der ersten Quellcodeversion 207 und Zeilen der zweiten Quellcodeversion 215.

In der Versionsidentität 219 ist somit definiert, welche Zeilen der zweiten Quellcodeversion 215 mit Zeilen der ersten Quellcodeversion 207 übereinstimmen und welche Zeilen der zweiten Quellcodeversion 215 keine Entsprechung in der ersten Quellcodeversion 207 aufweisen. Für die übereinstimmenden Zeilen der zweiten Quellcodeversion 215 wird ferner definiert, mit welchen Zeilen der ersten Quellcodeversion 207 die Übereinstimmung vorliegt.

In einem Relationsermittlungsschritt 107 wird basierend auf der ersten Maschinencode-Quellcode-Relation 211 und der Versionsidentität 219 eine zweite Maschinencode-Quellcode-Relation 227 ermittelt. Die zweite Maschinencode-Quellcode-Relation 227 definiert hierbei Zuordnungen zwischen den Zeilen der zweiten Quellcodeversion 215 und den Elementen des Maschinencodes 209.

In einem Debugging-Schritt 109 wird darauffolgend unter Berücksichtigung der zweiten Maschinencode-Quellcode-Relation 227 basierend auf der zweiten Quellcodeversion 215 ein Debugging-Vorgang 224 des Steuerprogramms unter Verwendung des auf der Steuereinheit 201 des Automatisierungssystems 200 gespeicherten Maschinencodes 209 ausgeführt.

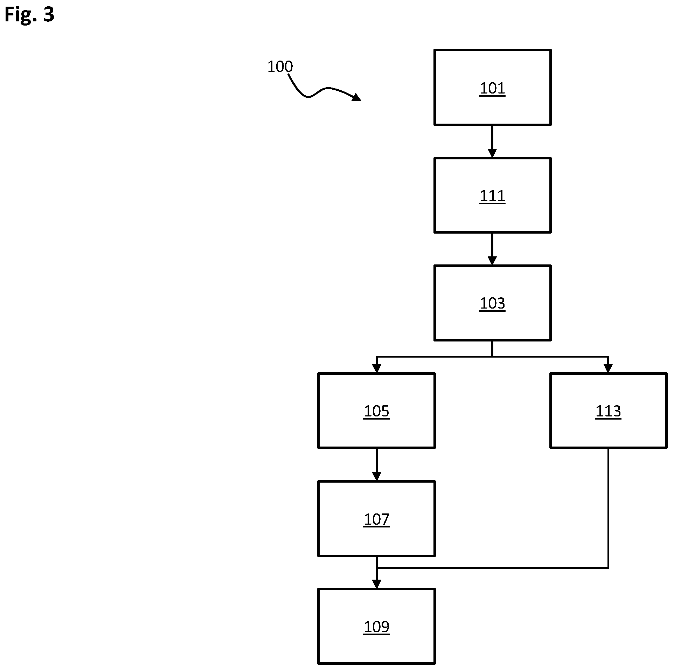

Fig. 3 zeigt ein weiteres Flussdiagramm des Verfahrens 100 zum Ausführen eines Debugging-Vorgangs 224 gemäß einer weiteren Ausführungsform.

Die in Fig. 3 gezeigte Ausführungsform des Verfahrens 100 basiert auf der Ausführungsform in Fig. 2 und umfasst alle dort beschriebenen Verfahrensschritte. Sollten diese in der gezeigten Ausführungsform übereinstimmen, wird von einer erneuten detaillierten Beschreibung abgesehen.

Abweichend von der Ausführungsform in Fig. 2 wird in der Ausführungsform in Fig. 3 zunächst in einem Verschlüsselungsschritt 111 eine Verschlüsselung der zweiten Quellcodeversion 215 vorgenommen und eine zweite verschlüsselte Quellcodeversion 223 generiert.

Analog wurde zuvor eine entsprechende Verschlüsselung der ersten Quellcodeversion 207 vorgenommen und eine entsprechende erste verschlüsselte Quellcodeversion 221 generiert. Die erste verschlüsselte Quellcodeversion 221 wurde entsprechend in der ersten Quellcodeidentität 213 berücksichtigt und auf der Steuereinheit 201 des Automatisierungssystems 200 gespeichert.

Die Verschlüsselungen der ersten und zweiten Quellcodeversionen 207, 215 können zeilenweise vorgenommen werden, indem einzelne Zeilen der ersten und zweiten Quellcodeversionen 207, 215 in entsprechende verschlüsselte Zeilen der ersten und zweiten verschlüsselten Quellcodeversionen 221, 223 überführt werden. Durch die zeilenweise Verschlüsselung bleibt die Zeilenstruktur der ersten und zweiten Quellcodeversionen 207, 215 erhalten.

Gemäß einer Ausführungsform kann die Verschlüsselung beispielsweise als eine Binärverschlüsselung ausgebildet sein. Hierzu können beispielsweise für die zeilenweise Verschlüsselung für einzelne Zeilen der ersten und zweiten Quellcodeversionen 207, 215 Hash-Werte berechnet werden.

In den Verschlüsselungsvorgängen 226, 228 der ersten und zweiten Quellcodeversionen 207, 215 wird entsprechend ein identischer Schlüssel verwendet, sodass eine vergleichbare Verschlüsselung der einzelnen Zeilen der verschiedenen Quellcodeversionen ermöglicht ist.

Analog zur ersten Quellcodeidentität 213 wird in der gezeigten Ausführungsform die zweite Quellcodeidentität 217 basierend auf der zweiten verschlüsselten Quellcodeversion 223 generiert.

Im Quellcodevergleichsschritt 103 werden entsprechend die verschlüsselten Zeilen der ersten und zweiten verschlüsselten Quellcodeversionen 221, 223 der ersten und zweiten Quellcodeidentitäten 213, 217 miteinander verglichen. Hierzu muss keine Entschlüsselung der verschlüsselten Zeilen der ersten und zweiten verschlüsselten Quellcodeversionen 221, 223 ausgeführt werden.

Stattdessen kann der Vergleich auf den verschlüsselten Zeilen der verschlüsselten Quellcodeversionen 221, 223 erfolgen.

Hierbei wird davon ausgegangen, dass für Zeilen mit identischem Inhalt eine identische Verschlüsselung generiert wird, während Zeilen mit unterschiedlichem Inhalt zu unterschiedlichen verschlüsselten Zeilen führen. Das Vergleichen der verschlüsselten Zeilen der ersten und zweiten verschlüsselten Quellcodeversionen 221, 223 kann beispielsweise durch Ausführen eines im Stand der Technik bekannten Verfahrens zur Bestimmung der längsten gemeinsamen Teilsequenz auf die verschlüsselten Zeilen der jeweiligen verschlüsselten Quellcodeversionen bewirkt werden.

Durch Ausführung des Verfahrens zur Bestimmung der längsten gemeinsamen Teilsequenz kann eine exakte Zuordnung der verschlüsselten Zeilen der zweiten verschlüsselten Quellcodeversion 223 zu den verschlüsselten Zeilen der ersten verschlüsselten Quellcodeversion 221 erfolgen. Hierbei kann eindeutig zugeordnet werden, welche verschlüsselte Zeile der ersten verschlüsselten Quellcodeversion 221 einer verschlüsselten Zeile der zweiten verschlüsselten Quellcodeversion 223 entspricht.

Basierend auf dem Vergleichen der ersten und zweiten verschlüsselten Quellcodeversionen 221, 223 wird im Identitätsgenerierungsschritt 105 die Versionsidentität 219 generiert. Diese beschreibt, wie oben bereits dargelegt, Zuordnungen zwischen den Zeilen der ersten Quellcodeversion 207 und den zweiten der zweiten Quellcodeversion 215. Hierbei wird davon Gebrauch gemacht, dass bei der zeilenweisen Verschlüsselung der ersten und zweiten Quellcodeversionen 207, 215 die Zeilenstruktur erhalten bleibt.

Dies bedeutet, dass eine erste verschlüsselte Zeile einer verschlüsselten Quellcodeversion eine Verschlüsselung einer ersten unverschlüsselten Zeile der entsprechenden unverschlüsselten Quellcodeversion entspricht. Die Zeilennummern der jeweiligen verschlüsselten bzw. unverschlüsselten Zeilen sind hierbei gleich.

Durch die Zuordnungen zwischen den verschlüsselten Zeilen der ersten und zweiten verschlüsselten Quellcodeversionen 221, 223 kann somit auf die entsprechenden Zuordnungen der unverschlüsselten Zeilen der ersten und zweiten Quellcodeversionen 207, 215 geschlossen werden.

Die basierend auf den ersten und zweiten verschlüsselten Quellcodeversionen 221, 223 generierte Versionsidentität 219 entspricht somit der in der oben beschriebenen Ausführungsform auf den ersten und zweiten Quellcodeversionen 207, 215 berechneten Versionsidentität 219.

Ferner wird in der gezeigten Ausführungsform in einem Informationsbereitstellungsschritt 113 eine Übereinstimmungsinformation 225 bereitgestellt. In der Übereinstimmungsinformation 225 sind Zeilen der zweiten Quellcodeversion 215 definiert, die mit Zeilen der ersten Quellcodeversion 207 übereinstimmen bzw. Zeilen, die mit keiner Zeile der ersten Quellcodeversion 207 übereinstimmen. Ferner können die Zeilen der ersten Quellcodeversion 207, die in der zweiten Quellcodeversion 215 gelöscht sind, angezeigt beziehungsweise markiert werden. Die Markierung kann die tatsächlich gelöschte Zeile und/oder die Zeilennummer der gelöschten Zeile und/oder die Anzahl der gelöschten Zeilen umfassen. Die Übereinstimmungsinformation 225 kann einem Entwickler durch Markierungen in der zweiten Quellcodeversion 215 angezeigt werden.

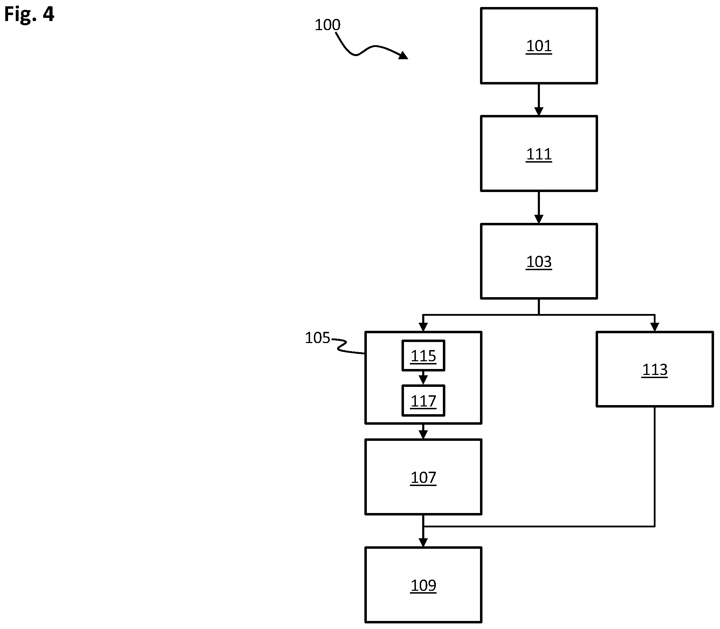

Fig. 4 zeigt ein weiteres Flussdiagramm des Verfahrens 100 zum Ausführen eines Debugging-Vorgangs 224 gemäß einer weiteren Ausführungsform.

Die in Fig. 4 gezeigte Ausführungsform basiert auf der Ausführungsform in Fig. 3 und umfasst alle dort beschriebenen Verfahrensschritte.

Abweichend zu der Ausführungsform in Fig. 3 werden in der gezeigten Ausführungsform in Fig. 4 im Identitätsgenerierungsschritt 105 zunächst in einem Dateizuordnungsschritt 115 erste Dateien, die Inhalte der ersten Quellcodeversion 207 bzw. der ersten verschlüsselten Quellcodeversion 221 umfassen, zweiten Dateien zugeordnet, die Inhalte der zweiten Quellcodeversion 215 bzw. der zweiten verschlüsselten Quellcodeversion 223 umfassen.

Jeder ersten Datei wird hierbei maximal eine zweite Datei zugeordnet und jeder zweiten Datei wird maximal eine erste Datei zugeordnet.

Gemäß einer Ausführungsform kann die Zuordnung der ersten und zweiten Dateien basierend auf Dateipfaden der jeweiligen ersten und zweiten Dateien bewirkt werden.

Alternativ oder zusätzlich hierzu können die Zuordnungen der ersten und zweiten Dateien unter Berücksichtigung der jeweiligen Inhalte der ersten und zweiten Dateien bewirkt werden. Hierzu kann beispielsweise das oben beschriebene Verfahren zur Bestimmung der längsten gemeinsamen Teilsequenzangewendet werden.

In einem Dateivergleichsschritt 117 werden die einander zugeordneten ersten und zweiten Dateien miteinander verglichen. Hierzu kann wiederum das bereits erwähnte Verfahren zur Bestimmung der längsten gemeinsamen Teilsequenz für die jeweiligen Inhalte der einander zugeordneten ersten und zweiten Dateien angewendet werden.

Durch das Verfahren zur Bestimmung der längsten gemeinsamen Teilsequenz können somit die einander zugeordneten ersten und zweiten Dateien verglichen und erste und zweite Dateien erkannt werden, die einen gleichen oder ähnlichen Inhalt umfassen.

Durch die Dateizuordnung und den Dateivergleich kann die oben beschriebene Generierung der Versionsidentität 219 bewirkt werden, indem über das beschriebene Vergleichen der Inhalte der Dateien, die insbesondere die bereits beschriebenen unverschlüsselten Zeilen der ersten und zweiten Quellcodeversionen 207, 215 bzw. die verschlüsselten Zeilen der ersten und zweiten verschlüsselten Quellcodeversionen 221, 223 umfassen, erreicht werden.

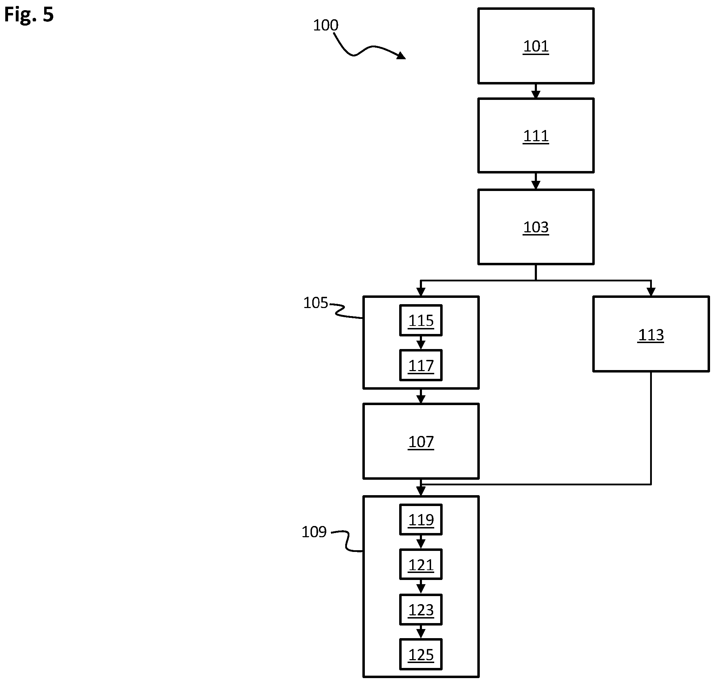

Fig. 5 zeigt ein weiteres Flussdiagramm des Verfahrens 100 zum Ausführen eines Debugging-Vorgangs 224 gemäß einer weiteren Ausführungsform.

Die in Fig. 5 gezeigte Ausführungsform basiert auf der Ausführungsform in Fig. 4 und umfasst alle dort beschriebenen Verfahrensschritte.

In der gezeigten Ausführungsform wird zum Ausführen des Debugging-Vorgangs 224 im Debugging-Schritt 109 zunächst in einem Abbildungsschritt 119 bei Empfangen eines Haltepunktbefehls des Nutzers des Entwicklungssystems 203 zum Setzen eines Haltepunkts innerhalb der in dem Entwicklungssystem 203 ausgeführten bzw. angezeigten zweiten Quellcodeversion 215 eine Zeile in der zweiten Quellcodeversion 215, in der der Haltepunkt zu setzen ist, auf eine Adresse bzw. ein Element des Maschinencodes 209 basierend auf der zweiten Maschinencode-Quellcode-Relation 227 abgebildet.

Hierüber wird gemäß der zweiten Maschinencode-Quellcode-Relation 227 der jeweiligen Zeile der zweiten Quellcodeversion 215 das entsprechende zugehörige Element des Maschinencodes 209 zugeordnet.

In einem Programmhalteschritt 121 wird ein Haltepunkt in einer Ausführung des Maschinencodes 209 durch die Steuereinheit 201 in der für den Haltepunkt identifizierten Adresse bzw. in dem Element des Maschinencodes 209 bewirkt. Gemäß dem gesetzten Haltepunkt wird die Steuerung wie in einem üblichen Debugging-Vorgang 224 bzw. die Ausführung des Steuerprogramms an der mit dem Haltepunkt identifizierten Stelle angehalten, sobald die Ausführung des Maschinencodes 209 den Haltepunkt erreicht.

In einem weiteren Abbildungsschritt 123 wird die jeweilige Adresse bzw. das Element des Maschinencodes 209, an der die Ausführung des Maschinencodes 209 bzw. des Steuerprogramms angehalten ist, auf die jeweilige Zeile der zweiten Quellcodeversion 215 basierend auf der zweiten Maschinencode-Quellcode-Relation 227 abgebildet. Dies kann auch für Stellen im Maschinencode 209 erfolgen, an denen kein Haltepunkt gesetzt wurde, die durch die zweite Maschinencode-Quellcode-Relation 227 jedoch in die zweite Quellcodeversion 215 übertragen wurden.

Wie in einem üblichen Debugging-Vorgang 224 wird dem Nutzer bzw. Entwickler in dem Entwicklungssystem 203 die jeweilige Zeile innerhalb des ausgeführten Quellcodes der zweiten Quellcodeversion 215 angezeigt, an der die Ausführung des Steuerprogramms bzw. des zugehörigen Maschinencodes 209 angehalten wurde. Dies wird über die, wie oben beschrieben, generierte zweite Maschinencode-Quellcode-Relation 227 bewirkt, in der die jeweiligen Elemente des Maschinencodes 209 einzelnen Zeilen der zweiten Quellcodeversion 215 zugeordnet sind.

In einem Anzeigeschritt 125 wird die Zeile der zweiten Quellcodeversion 215, in der die Ausführung des Maschinencodes 209 gestoppt ist, in dem Entwicklungssystem 203 dem jeweiligen Entwickler angezeigt.

Wie zu den obigen Ausführungsformen beschrieben wurde, kann durch das erfindungsgemäße Verfahren 100 zum Ausführen eines Debugging-Vorgangs 224 eines Steuerprogramms eines Automatisierungssystems 200 ein Debugging eines Steuerprogramms basierend auf einer Version eines Quellcodes ausgeführt werden, die nicht der Quellcodeversion entspricht, auf der basierend durch einen Übersetzungsprozess ein entsprechender Maschinencode 209 des Steuerprogramms generiert wurde und auf der Steuereinheit 201 ausgeführt wird.

Hierdurch können Debugging-Vorgänge 224 ausgeführt werden, ohne dass während des Entwicklungsprozesses des Steuerprogramms bei jeder Änderung des Quellcodes eine erneute Übersetzung des Quellcodes in einen entsprechenden Maschinencode 209 und eine Aktualisierung des Maschinencodes 209 auf der Steuereinheit 201 einschließlich eines Neustarts der Ausführung des Steuerprogramms auf der Steuereinheit 201 ausgeführt werden muss.

Das erfindungsgemäße Verfahren 100 gemäß den oben beschriebenen Ausführungsformen kann durch ein entsprechendes Ausführungsmodul ausgeführt werden. Das Ausführungsmodul kann hierbei beispielsweise durch ein Entwicklungssystem 203 während eines Programmiervorgangs beziehungswiese zum Ausführen eines Übersetzungsvorgangs oder Debuggingvorgangs ausgeführt werden. Das Ausführungsmodul kann hierzu beispielsweise in das Entwicklungssystem integriert sein.

### Bezugszeichenliste

- 100: Verfahren
- 101: Empfangsschritt
- 103: Quellcodevergleichsschritt
- 105: Identitätsgenerierungsschritt
- 107: Relationsermittlungsschritt
- 109: Debugging-Schritt
- 111: Verschlüsselungsschritt
- 113: Informationsbereitstellungsschritt
- 115: Dateizuordnungsschritt
- 117: Dateivergleichsschritt
- 119: Abbildungsschritt
- 121: Programmhalteschritt
- 123: weiterer Abbildungsschritt
- 125: Anzeigeschritt

- 200: Automatisierungssystem
- 201: Steuereinheit
- 202: Sensor-/Aktoreinheit
- 203: Entwicklungssystem
- 205: weiteres Entwicklungssystem
- 207: erste Quellcodeversion
- 208: Übersetzungsvorgang
- 209: Maschinencode
- 211: erste Maschinencode-Quellcode-Relation
- 212: erster Zeilenidentifizierungsvorgang
- 213: erste Quellcodeidentität
- 214: Installationsvorgang
- 215: zweite Quellcodeversion
- 216: Quellcodeänderungsvorgang
- 217: zweite Quellcodeidentität
- 218: Kopiervorgang
- 219: Versionsidentität
- 220: zweiter Zeilenidentifizierungsvorgang
- 221: erste verschlüsselte Quellcodeversion
- 222: Identitätsgenerierungsvorgang
- 223: zweite verschlüsselte Quellcodeversion
- 224: Debugging-Vorgang
- 225: Übereinstimmungsinformation
- 226: erster Verschlüsselungsvorgang
- 227: zweite Maschinencode-Quellcode-Relation
- 228: zweiter Verschlüsselungsvorgang
- 230: Relationsgenerierungsvorgang
- 232: Übereinstimmungsbereitstellungsvorgang

## Patentansprüche

1. Verfahren (100) zum Ausführen eines Debugging-Vorgangs eines Steuerprogramms eines Automatisierungssystems (200), umfassend:
Empfangen einer ersten Maschinencode-Quellcode-Relation (211) und einer ersten Quellcodeidentität (213) durch ein Entwicklungssystem (203) zum Ausführen des Debugging-Vorgangs (224) in einem Empfangsschritt (101), wobei die erste Maschinencode-Quellcode-Relation (211) Zuordnungen zwischen Zeilen einer ersten Quellcodeversion (207) des Steuerprogramms und entsprechenden Code-Elementen eines durch Übersetzung der ersten Quellcodeversion (207) generierten Maschinencodes (209) des Steuerprogramms definiert, und wobei die erste Quellcodeidentität (213) eine Information bezüglich der ersten Quellcodeversion (207) umfasst, die eine Identifikation einzelner Zeilen der ersten Quellcodeversion (207) ermöglicht;
Vergleichen der ersten Quellcodeidentität (213) mit einer zweiten Quellcodeidentität (217) einer auf dem Entwicklungssystem (203) ausgeführten zweiten Quellcodeversion (215) in einem Quellcodevergleichsschritt (103), wobei die zweite Quellcodeversion (215) durch wenigstens eine Quellcodeänderung aus der ersten Quellcodeversion (207) hervorgegangen ist, wobei die zweite Quellcodeidentität (217) eine Information bezüglich der zweiten Quellcodeversion (215) umfasst, die eine Identifikation einzelner Zeilen der zweiten Quellcodeversion (215) ermöglicht, und wobei die erste Quellcodeidentität (213) die erste Quellcodeversion (207) und die zweite Quellcodeidentität (217) die zweite Quellcodeversion (215) umfasst, wobei die erste Quellcodeidentität (213) hierzu die vollständige erste Quellcodeversion (207) oder Teile der ersten Quellcodeversion (207) umfasst und wobei die zweite Quellcodeidentität (217) hierbei die vollständige zweite Quellcodeversion (215) oder Teile der zweiten Quellcodeversion (215) umfasst
Generieren einer Versionsidentität (219) basierend auf dem Vergleich der ersten Quellcodeidentität (213) und der zweiten Quellcodeidentität (217) in einem Identitätsgenerierungsschritt (105), wobei die Versionsidentität (219) Zuordnungen zwischen Zeilen der ersten Quellcodeversion (207) und den Zeilen der ersten Quellcodeversion (207) entsprechenden Zeilen der zweiten Quellcodeversion (215) definiert;
Ermitteln einer zweiten Maschinencode-Quellcode-Relation (227) basierend auf der ersten Maschinencode-Quellcode-Relation (211) und der Versionsidentität (219) in einem Relationsermittlungsschritt (107), wobei die zweite Maschinencode-Quellcode-Relation (227) Zuordnungen zwischen Zeilen der zweiten Quellcodeversion (215) und entsprechenden Code-Elementen des Maschinencodes (209) definiert; und
Ausführen des Debugging-Vorgangs (224) des auf der Steuereinheit (201) gespeicherten Maschinencodes (209) basierend auf der zweiten Quellcodeversion (215) unter Verwendung der zweiten Maschinencode-Quellcode-Relation (227) in einem Debugging-Schritt (109).

2. Verfahren (100) nach Anspruch 1, wobei die erste Quellcodeidentität (213) eine erste verschlüsselte Quellcodeversion (221) umfasst, die auf einer Verschlüsselung der ersten Quellcodeversion (207) basiert, und wobei das Verfahren (100) ferner umfasst:
Verschlüsseln der zweiten Quellcodeversion (215) und Generieren einer zweiten verschlüsselten Quellcodeversion (223) in einem Verschlüsselungsschritt (111), wobei die zweite Quellcodeidentität (217) die zweite verschlüsselte Quellcodeversion (223) umfasst; und wobei das Vergleichen der ersten und zweiten Quellcodeidentitäten (213, 217) ein Vergleichen der ersten und zweiten verschlüsselten Quellcodeversionen (221, 223) umfasst.

3. Verfahren (100) nach Anspruch 2, wobei die Verschlüsselung der ersten und zweiten Quellcodeversionen (207, 215) zeilenweise erfolgt.

4. Verfahren (100) nach Anspruch 2 oder 3, wobei die Verschlüsselung der ersten und zweiten Quellcodeversionen (207, 215) als eine Binärverschlüsselung ausgebildet ist.

5. Verfahren (100) nach einem der voranstehenden Ansprüche 2 bis 4, wobei das Vergleichen der ersten und zweiten verschlüsselten Quellcodeversionen (221, 223) im Identitätsgenerierungsschritt (105) ein zeilenweises Vergleichen der verschlüsselten Zeilen der ersten und zweiten verschlüsselten Quellcodeversionen (221, 223) umfasst.

6. Verfahren (100) nach Anspruch 5, wobei eine Übereinstimmung einer Verschlüsselung einer Zeile der ersten verschlüsselten Quellcodeversion (221) mit einer Verschlüsselung einer Zeile der zweiten verschlüsselten Quellcodeversion (223) als eine vollständige Übereinstimmung der jeweiligen Zeilen der ersten und zweiten Quellcodeversionen (207, 215) interpretiert wird.

7. Verfahren (100) nach einem der voranstehenden Ansprüche 4 bis 6, wobei die Binärverschlüsselung als ein Hash-Wert der jeweiligen Zeile ausgebildet ist.

8. Verfahren (100) nach einem der voranstehenden Ansprüche, wobei die erste Maschinencode-Quellcode-Relation (211) und die erste Quellcodeidentität (213) auf einer Steuereinheit des Automatisierungssystems (200) gespeichert sind, und wobei der Empfangsschritt (101) ein Kopieren der ersten Maschinencode-Quellcode-Relation (211) und der ersten Quellcodeidentität (213) von der Steuereinheit (201) auf das Entwicklungssystem (203) umfasst.

9. Verfahren (100) nach einem der voranstehenden Ansprüche, ferner umfassend:
Bereitstellen einer Übereinstimmungsinformation (225) bezüglich einer Abweichung und/oder Übereinstimmung der ersten Quellcodeversion (207) und der zweiten Quellcodeversion (215) basierend auf dem Vergleich zwischen den ersten und zweiten verschlüsselten Quellcodeversionen (221, 223) in einem Informationsbereitstellungsschritt (113).

10. Verfahren (100) nach Anspruch 9, wobei die Übereinstimmungsinformation (225) Zeilen in der zweiten Quellcodeversion (215) markiert, die in der zweiten Quellcodeversion (215) gegenüber der ersten Quellcodeversion (207) gelöscht oder hinzugefügt worden sind.

11. Verfahren (100) nach Anspruch 9 oder 10, wobei die Übereinstimmungsinformation (225) in dem Entwicklungssystem (203) einem Nutzer zum Durchführen des Debugging-Vorgangs (224) angezeigt wird.

12. Verfahren (100) nach einem der voranstehenden Ansprüche, wobei der Identitätsgenerierungsschritt (105) umfasst:
Zuordnen von ersten Dateien, die Zeilen der ersten Quellcodeversion (207) und/oder Zeilen der ersten verschlüsselten Quellcodeversion (221) umfassen, zu zweiten Dateien, die Zeilen der zweiten Quellcodeversion (215) und/oder Zeilen der zweiten verschlüsselten Quellcodeversion (223) umfassen, in einem Dateizuordnungsschritt (115), wobei jeder ersten Datei maximal eine zweite Datei und jeder zweiten Datei maximal eine erste Datei zugeordnet werden; und
Vergleichen der Zeilen der ersten Quellcodeversion (207) und/oder der ersten verschlüsselten Quellcodeversion (221) der ersten Dateien mit Zeilen der zweiten Quellcodeversion (215) und/oder der zweiten verschlüsselten Quellcodeversion (223) der entsprechend zugeordneten zweiten Dateien in einem Dateivergleichsschritt (117).

13. Verfahren (100) nach Anspruch 12, wobei das Zuordnen der ersten und zweiten Dateien im Dateizuordnungsschritt (115) basierend auf Dateipfaden der jeweiligen ersten und zweiten Dateien oder über eine Ähnlichkeit der Zeilen und/oder der verschlüsselten Zeilen der ersten und zweiten Dateien erfolgt, und wobei die Ähnlichkeit durch Ausführen eines Verfahrens zur Bestimmung der längsten gemeinsamen Teilsequenz -Longest Common Subsequence - LCS- auf die in den ersten und zweiten Dateien gespeicherten Zeilen der ersten und zweiten Quellcodeversionen (207, 215) und/oder der ersten und zweiten verschlüsselten Quellcodeversionen (221, 223) bewirkt wird.

14. Verfahren (100) nach Anspruch 12 oder 13, wobei das Vergleichen der Inhalte der einander zugeordneten ersten und zweiten Dateien durch Ausführung des Verfahrens zur Bestimmung der längsten gemeinsamen Teilsequenz auf die Inhalte der ersten und zweiten Dateien erfolgt.

15. Verfahren (100) nach einem der voranstehenden Ansprüche, wobei das Ausführen des Debugging-Vorgangs (224) umfasst:
Bei Empfangen eines Haltepunktbefehls des Nutzers zum Setzen eines Haltepunkts innerhalb der in dem Entwicklungssystem (203) ausgeführten zweiten Quellcodeversion (215):
Abbilden einer Zeile in der zweiten Quellcodeversion (215), in der der Haltepunkt zu setzen ist, auf eine Adresse des Maschinencodes (209) basierend auf der zweiten Maschinencode-Quellcode-Relation (227) in einem Abbildungsschritt (119);
Bewirken eines Halts in einer Ausführung des Maschinencodes (209) durch die Steuereinheit (201) an einer für den Haltepunkt identifizierten Adresse des Maschinencodes (209) in einem Programmhalteschritt (121); und
Abbilden der Adresse des Maschinencodes (209), an der die Ausführung des Maschinencodes (209) angehalten ist, auf die jeweilige Zeile der zweiten Quellcodeversion (215) basierend auf der zweiten Maschinencode-Quellcode-Relation (227) in einem weiteren Abbildungsschritt (123); und
Anzeigen der Zeile der zweiten Quellcodeversion (215), in der die Ausführung des Maschinencodes (209) gestoppt ist, in der Entwicklungsumgebung in einem Anzeigeschritt (125).

## Claims

1. A method (100) for executing a debugging process of a control program of an automation system (200), comprising:
receiving a first machine code source code relation (211) and a first source code identity (213) by a development system (203) for executing the debugging process (224) in a receiving step (101), wherein the first machine code source code relation (211) defines allocations between lines of a first source code version (207) of the control program and corresponding code elements of a machine code (209) of the control program generated by translating the first source code version (207), and wherein the first source code identity (213) comprises information relating to the first source code version (207) that allows for identifying individual lines of the first source code version (207);
comparing the first source code identity (213) with a second source code identity (217) of a second source code version (215) executed on the development system (203) in a source code comparing step (103), wherein the second source code version (215) has emerged from the first source code version (207) by at least one source code change, wherein the second source code identity (217) comprises information relating to the second source code version (215) which allows for identifying individual lines of the second source code version (215), and wherein the first source code identity (213) comprises the first source code version (207) and the second source code identity (217) comprises the second source code version (215), wherein for this purpose the first source code identity (213) comprises the entire first source code version (207) or parts of the first source code version (207) and wherein the second source code identity (217) in this context comprises the entire second source code version (215) or parts of the second source code version (215);
generating a version identity (219) based on the comparison of the first source code identity (213) and the second source code identity (217) in an identity generating step (105), wherein the version identity (219) defines allocations between lines of the first source code version (207) and lines of the second source code version (215) corresponding to the lines of the first source code version (207);
determining a second machine code source code relation (227) based on the first machine code source code relation (211) and the version identity (219) in a relation determining step (107), wherein the second machine code source code relation (227) defines allocations between lines of the second source code version (215) and corresponding code elements of the machine code (209); and
executing the debugging process (224) of the machine code (209) stored on the controller (201) based on the second source code version (215) using the second machine code source code relation (227) in a debugging step (109).

2. The method (100) according to claim 1, wherein the first source code identity (213) comprises a first encrypted source code version (221) based on an encryption of the first source code version (207), and wherein the method (100) further comprises:
encrypting the second source code version (215) and generating a second encrypted source code version (223) in an encrypting step (111), wherein the second source code identity (217) comprises the second encrypted source code version (223); and wherein comparing the first and second source code identities (213, 217) comprises comparing the first and second encrypted source code versions (221, 223).

3. The method (100) according to claim 2, wherein the encrypting of the first and second source code versions (207, 215) is carried out line by line.

4. The method (100) according to claim 2 or 3, wherein the encryption of the first and second source code versions (207, 215) is embodied as a binary encryption.

5. The method (100) according to any one of the preceding claims 2 to 4, wherein comparing the first and second encrypted source code versions (221, 223) in the identity generating step (105) comprises comparing the encrypted lines of the first and second encrypted source code versions (221, 223) line by line.

6. The method (100) according to claim 5, wherein a match of an encryption of a line of the first encrypted source code version (221) with an encryption of a line of the second encrypted source code version (223) is interpreted as a complete match of the respective lines of the first and second source code versions (207, 215).

7. The method (100) according to any one of the preceding claims 4 to 6, wherein the binary encryption is formed as a hash value of the respective row.

8. The method (100) according to any one of the preceding claims, wherein the first machine code source code relation (211) and the first source code identity (213) are stored on a controller of the automation system (200), and wherein the receiving step (101) comprises copying the first machine code source code relation (211) and the first source code identity (213) from the controller (201) to the development system (203).

9. The method (100) according to any one of the preceding claims, further comprising: providing a match information (225) regarding a deviation and/or match of the first source code version (207) and of the the second source code version (215) based on the comparison between the first and second encrypted source code versions (221, 223) in an information providing step (113).

10. The method (100) according to claim 9, wherein the match information (225) marks lines in the second source code version (215) that have been deleted or added in the second source code version (215) with respect to the first source code version (207).

11. The method (100) according to claim 9 or 10, wherein the match information (225) in the development system (203) is displayed to a user for executing the debugging process (224).

12. The method (100) according to any one of the preceding claims, wherein the identity generating step (105) comprises:
allocating first files comprising lines of the first source code version (207) and/or lines of the first encrypted source code version (221) with second files comprising lines of the second source code version (215) and/or lines of the second encrypted source code version (223) in a file allocating step (115), wherein at most one second file is allocated to each first file and at most one first file is allocated to each second file; and
comparing the lines of the first source code version (207) and/or the first encrypted source code version (221) of the first files with lines of the second source code version (215) and/or the second encrypted source code version (223) of the correspondingly allocated second files in a file comparing step (117).

13. The method (100) according to claim 12, wherein the allocation of the first and second files in the file allocating step (115) is carried out based on file paths of the respective first and second files or via a similarity of the lines and/or the encoded lines of the first and second files, and wherein the similarity is effected by executing a method for determining the Longest Common Partial sequence (LCS) on the lines of the first and second source code versions (207, 215) and/or the first and second encrypted source code versions (221, 223) stored in the first and second files.

14. The method (100) according to claim 12 or 13, wherein the comparing of the contents of the allocated first and second files is carried out by executing the method for determining the longest common partial sequence on the contents of the first and second files.

15. The method (100) according to any one of the preceding claims, wherein executing the debugging process (224) comprises:
upon receiving a holding point command from the user to set a holding point within the second source code version (215) executed in the development system (203):
imaging a line in the second source code version (215), in which the holding point is to be set, to an address of the machine code (209) based on the second machine code source code relation (227) in an imaging step (119);
causing a hold in an execution of the machine code (209) by the controller (201) at an address of the machine code (209) identified for the halt point in a program holding step (121); and
imaging the address of the machine code (209) at which the execution of the machine code (209) is put on hold to the respective line of the second source code version (215) based on the second machine code source code relation (227) in a further imaging step (123); and
displaying the line of the second source code version (215), in which the execution of the machine code (209) is put on hold, in the development environment in a displaying step (125).

## Revendications

1. Procédé (100) pour exécuter une opération de débogage d'un programme de commande d'un système d'automatisation (200), comprenant :
la réception, par un système de développement (203), d'une première relation code machine-code source (211) et d'une première identité de code source (213) pour exécuter l'opération de débogage (224) lors d'une étape de réception (101), la première relation code machine-code source (211) définissant des associations entre des lignes d'une première version de code source (207) du programme de commande et des éléments de code correspondants d'un code machine (209) du programme de commande, générés par traduction de la première version de code source (207), et la première identité de code source (213) comprenant des informations concernant la première version de code source (207) qui permettent d'identifier des lignes individuelles de la première version de code source (207) ;
la comparaison de la première identité de code source (213) à une deuxième identité de code source (217) d'une deuxième version de code source (215) exécutée sur le système de développement (203) lors d'une étape de comparaison de code source (103), la deuxième version de code source (215) étant issue de la première version de code source (207) par au moins une modification de code source, la deuxième identité de code source (217) comprenant des informations concernant la deuxième version de code source (215) qui permettent une identification de lignes individuelles de la deuxième version de code source (215), et la première identité de code source (213) comprenant la première version de code source (207) et la deuxième identité de code source (217) comprenant la deuxième version de code source (215), la première identité de code source (213) comprenant pour cela la première version de code source (207) complète ou des parties de la première version de code source (207), et la deuxième identité de code source (217) comprenant ici la deuxième version de code source (215) complète ou des parties de la deuxième version de code source (215)
la génération d'une identité de version (219) sur la base de la comparaison de la première identité de code source (213) et de la deuxième identité de code source (217) lors d'une étape de génération d'identité (105), l'identité de version (219) définissant des associations entre des lignes de la première version de code source (207) et des lignes de la deuxième version de code source (215) correspondant aux lignes de la première version de code source (207) ;
la détermination d'une deuxième relation code machine-code source (227) sur la base de la première relation code machine-code source (211) et de l'identité de version (219) lors d'une étape de détermination de relation (107), la deuxième relation code machine-code source (227) définissant des associations entre des lignes de la deuxième version code source (215) et des éléments de code correspondants du code machine (209) ; et
l'exécution de l'opération de débogage (224) du code machine (209) stocké sur l'unité de commande (201) sur la base de la deuxième version de code source (215) en utilisant la deuxième relation code machine-code source (227) lors d'une étape de débogage (109).

2. Procédé (100) selon la revendication 1, dans lequel la première identité de code source (213) comprend une première version de code source chiffrée (221) qui est basée sur le chiffrement de la première version de code source (207), et dans lequel le procédé (100) comprend en outre :
le chiffrement de la deuxième version de code source (215) et la génération d'une deuxième version de code source chiffrée (223) lors d'une étape de chiffrement (111), la deuxième identité de code source (217) comprenant la deuxième version de code source chiffrée (223) ; et la comparaison des première et deuxième identités de code source chiffrées (213, 217) comprenant la comparaison des première et deuxième versions de code source chiffrées (221, 223).

3. Procédé (100) selon la revendication 2, dans lequel le chiffrement des première et deuxième versions de code source (207, 215) est effectué ligne par ligne.

4. Procédé (100) selon la revendication 2 ou 3, dans lequel le chiffrement des première et deuxième versions de code source (207, 215) est réalisé sous la forme d'un chiffrement binaire.

5. Procédé (100) selon l'une des revendications précédentes 2 à 4, dans lequel la comparaison des première et deuxième versions de code source chiffrées (221, 223) lors de l'étape de génération d'identité (105) comprend une comparaison ligne par ligne des lignes chiffrées des première et deuxième versions de code source chiffrées (221, 223).

6. Procédé (100) selon la revendication 5, dans lequel une correspondance d'un chiffrement d'une ligne de la première version de code source chiffrée (221) avec un chiffrement d'une ligne de la deuxième version de code source chiffrée (223) est interprétée comme étant une correspondance complète des lignes respectives des première et deuxième versions de code source (207, 215).

7. Procédé (100) selon l'une des revendications 4 à 6 précédentes, dans lequel le chiffrement binaire est réalisé sous la forme d'une valeur de hachage de la ligne respective.

8. Procédé (100) selon l'une des revendications précédentes, dans lequel la première relation code machine-code source (211) et la première identité de code source (213) sont stockées sur une unité de commande du système d'automatisation (200), et dans lequel l'étape de réception (101) comprend la copie de la première relation code machine-code source (211) et de la première identité de code source (213) de l'unité de commande (201) vers le système de développement (203).

9. Procédé (100) selon l'une des revendications précédentes, comprenant en outre :
la fourniture d'informations de concordance (225) concernant un écart et/ou une concordance entre la première version de code source (207) et la deuxième version de code source (215) sur la base de la comparaison entre les première et deuxième versions de code source chiffrées (221, 223) lors d'une étape de fourniture d'informations (113).

10. Procédé (100) selon la revendication 9, dans lequel les informations de concordance (225) marquent des lignes dans la deuxième version de code source (215) qui ont été supprimées ou ajoutées dans la deuxième version de code source (215) par rapport à la première version de code source (207).

11. Procédé (100) selon la revendication 9 ou 10, dans lequel les informations de concordance (225) sont présentées dans le système de développement (203) à un utilisateur pour exécuter l'opération de débogage (224).

12. Procédé (100) selon l'une des revendications précédentes, dans lequel l'étape de génération d'identité (105) comprend :
l'association de premiers fichiers qui comprennent des lignes de la première version de code source (207) et/ou des lignes de la première version de code source chiffrée (221), à des deuxièmes fichiers qui comprennent des lignes de la deuxième version de code source (215) et/ou des lignes de la deuxième version de code source chiffrée (223) lors d'une étape d'association de fichiers (115), au maximum un deuxième fichier étant associé à chaque premier fichier et au maximum un premier fichier étant associé à chaque deuxième fichier ; et
la comparaison des lignes de la première version de code source (207) et/ou de la première version de code source chiffrée (221) des premiers fichiers à des lignes de la deuxième version de code source (215) et/ou de la deuxième version de code source chiffrée (223) des deuxièmes fichiers associés de manière correspondante lors d'une étape de comparaison de fichiers (117).

13. Procédé (100) selon la revendication 12, dans lequel l'association des premier et deuxième fichiers lors de l'étape d'association de fichiers (115) est effectuée sur la base de chemins de fichiers des premier et deuxième fichiers respectifs ou via une ressemblance des lignes et/ou des lignes chiffrées des premier et deuxième fichiers, et la ressemblance étant due à l'exécution d'un procédé de détermination de la sous-séquence commune la plus longue - LCS - sur les lignes des première et deuxième versions de code source (207, 215) et/ou des première et deuxième versions de code source chiffrées (221, 223) stockées dans les premier et deuxième fichiers.

14. Procédé (100) selon la revendication 12 ou 13, dans lequel les contenus des premier et deuxième fichiers associés l'un à l'autre sont comparés en exécutant le procédé pour déterminer la sous-séquence commune la plus longue sur les contenus des premier et deuxième fichiers.

15. Procédé (100) selon l'une des revendications précédentes, dans lequel l'exécution de l'opération de débogage (224) comprend :
lors de la réception d'une instruction de point d'arrêt en provenance de l'utilisateur pour définir un point d'arrêt dans la deuxième version de code source (215) exécutée dans le système de développement (203) :
le mappage d'une ligne dans la deuxième version de code source (215) dans laquelle le point d'arrêt doit être placé vers une adresse du code machine (209) sur la base de la deuxième relation code machine-code source (227) lors d'une étape de mappage (119) ;
le déclenchement d'un arrêt lors d'une exécution du code machine (209) par l'unité de commande (201) à une adresse du code machine (209) identifiée pour le point d'arrêt lors d'une étape d'arrêt de programme (121) ; et
le mappage de l'adresse du code machine (209) à laquelle l'exécution du code machine (209) est arrêtée vers la ligne respective de la deuxième version de code source (215) sur la base de la deuxième relation code machine-code source (227) lors d'une autre étape de mappage (123) ; et
l'affichage de la ligne de la deuxième version de code source (215) dans laquelle l'exécution du code machine (209) est arrêtée dans l'environnement de développement lors d'une étape d'affichage (125).
